(19)

Europäisches
Patentamt
European
Patent Office
Office européen
des brevets

(11)  **EP 4 407 069 A2**

(12)  **EUROPEAN PATENT APPLICATION**

(43) Date of publication:
**31.07.2024  Bulletin 2024/31**

(21) Application number: **24153235.7**

(22) Date of filing: **22.01.2024**

(51) International Patent Classification (IPC):
**C23F 13/04** (2006.01)       **G01S 19/00** (2010.01)
**G04R 20/02** (2013.01)

(52) Cooperative Patent Classification (CPC):
**C23F 13/04; G01S 19/00; G04R 20/02;**
C23F 2213/32

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **26.01.2023  SK 62023**

(71) Applicant: **CORR-EL, s.r.o.**
**045 01 Moldava nad Bodvou (SK)**

(72) Inventors:
• **Stiblár, Zoltán**
  **045 01 Moldava nad Bodvou (SK)**
• **Stiblár, Tibor**
  **045 01 Moldava nad Bodvou (SK)**

(74) Representative: **Wörz, Volker Alfred**
**Wörz Patentanwälte PartG mbB**
**Gablenberger Hauptstraße 32**
**70186 Stuttgart (DE)**

(54)  **ARRANGEMENT FOR COLLECTING AND PROCESSING DATA RELATED TO CATHODIC PROTECTION OF PRODUCT PIPELINES AND METHOD OF COLLECTING AND PROCESSING SUCH DATA**

(57)    The arrangement for collecting and processing data related to cathodic protection of product pipelines includes fixed devices and portable devices that are electronically connected for mutual communication and data transmission. The fixed devices are GPS Interrupters, e. g. of type T-3, placed in each CPS with reach to the diagnosed pipeline route in the number of n pieces, where n = the number of CPSs on an inspected pipeline route. The portable devices include a portable GPS Interrupter, e. g. of type T-3, a device, e. g. of type ZDaP-2, for measuring CPSs range and $E_{off}/E_{on}$ potentials, a 4-channel oscilloscope and a data processing device equipped with a control program for the device for measuring CPSs reach or range and potentials, while all fixed Interrupters are individually programmed with respect to the associated CPS, and the portable Interrupter is adapted to synchronize the device for measuring CPSs range and the potentials, with fixed GPS Interrupters. The fixed Interrupters and the portable Interrupter type T-3 are synchronously controlled by the GPS time signal, and the portable interrupter type T-3 is connected to the device for measuring CPSs range and potentials, using a serial line via a serial port, or via Bluetooth technology. The data processing device is electronically connected to the device for measuring of CPSs range and the $E_{off}/E_{on}$ potentials, and for processing and evaluating the measured data. The method of data collection and processing with the help of the given arrangement is also described.

EP 4 407 069 A2

**Description**

**Technological Field**

The technical solution refers to an arrangement for collecting and processing data related to the cathodic protection of product pipelines and to a method of data collection, processing and evaluation when measuring the range of cathodic protection stations, referred to hereinafter as CPSs, and potentials, and determining critical points on the cathodic protection, referred to hereinafter as CP, objects on pipelines.

**Prior Art**

It is well-known that the collection of data related to the monitoring of product pipelines is a difficult task and therefore considerable attention is paid to it. The collection and transmission of data in this area is key to ensuring a smooth operation and safety of metal product pipelines and tanks of various types, and therefore monitoring is carried out repeatedly, at precisely determined time intervals. Several specific electronic systems and methods of data measurement, data recording, data transmission and subsequent work with them have been developed in this area.

For example, in document SK1649-95 "Automatic System of Detection and Remote Transmission of Data, especially typical Data, Related to Liquid Fuel Tanks" describes an automatic system of detection and transmission of data, especially typical data, related to liquid fuel tanks. The suggested solution solves the indication of the passage of the amount of liquid fuel in the tanks through predetermined points, the pressure or vacuum of the air contained in the cavity, the control of the efficiency of the cathodic protection, and the like. The system includes means connected to the tank for capturing typical data and converting them into electric-type signals, means of their transmission to a collection and/or processing station, and timing devices that activate the relevant detection and transmission means in a predetermined period of time.

According to document DE 10 2011111 774 B4 a solution is known, which describes a solution related to temperature and pressure control of fuel delivery systems in which fuel is stored in or near a fuel tank or container, at fuel vapor pressure.

Document US 9,878,897 B2 describes a solution that relates to a system for monitoring a fluid dispensing system. The described system has an accumulation tank and a pipe system with a maximum output flow threshold.

In the field of cathodic protection of product pipelines, commonly used abbreviations are used in practice, which are also used in the following text.

Therefore, we present a list of used abbreviations:

A-CP - Anti-Corrosion Protection
AA-CP - Active Anti-Corrosion Protection
CP - Cathodic Protection
CPS(s) - Cathodic Protection Station(s)
AE - Anode; Earthing Anode
EUD - Electrical Unidirectional Drainage (drainage station)
EFD - Electrical Forced Drainage
VHPS - Very High Pressure (gas) System
HPS - High Pressure (gas) System
MPS - Medium Pressure (gas) System
LPS - Low-Pressure (gas) Network
LDN - Long-Distance (HPS, VHPS gas pipeline) Networks
DS - Oil Drain (= Discharge) Station
FS - Fitting Shaft (on the oil pipeline route)
CS - Compressor Station (gas)
RS - Regulation Station (gas)
PC - Pipeline Closure; PC - pipe cap
FIT - Fittings (e. g., drainer, dripper = colloquially "drip", cap in general,...)
AM - Airman
SR - Sludge Remover
TP - Test Point
CO - Connecting, Interconnecting Object (test station)
CO-A - interconnecting object between pipelines of the same operator
CO-B - interconnecting object between pipelines of different operators
CO-AB - interconnecting object between pipelines of the same operator and different operators

PP - Protector of the Pipe (Pipe Protector)

IJ - Isolating Joint

GT - Grounding Terminal of the overvoltage protection

BO - Bonding (Joining) Object (test station)

DP-BO - Drain Point Bonding Object = Connection point of the Negative Pole electric cable of the Source to the pipe

MP - built-in Measuring (Potential Test) Probe $Cu/CuSO_4$ (i. e., CSE), fixed in the ground, with measurement test coupons with areas of $100cm^2 / 10cm^2$ (e. g., types MS -100, MS -110, MS - 200, ...), (firmly embedded in the ground)

ME - $Cu/CuSO_4$ portable reference Measuring Electrode (i. e., CSE)

DIE - Diode Isolation Element (DC decoupling device)

EHVL - Especially HV Aerial Line

VHVL - VHVL Overhead Line

HVL - HV Overhead Line

22kV-C - 22kV Underground Cable

LV-C - LV Underground Cable

LDC - Long Distance (metallic telecommunication) Cable with lead jacket

ROC - Remote Optical Cable

CIPS - Close Interval Potential Survey - measuring potentials by step method

DCVG - Direct Current Voltage Gradient - method of finding insulation faults by measuring the voltage gradient of direct current

ASR = $\rho$ - Apparent Soil Resistivity (apparent resistivity of soil = $\rho$)

GPS - Global Positioning System - satellite global positioning system

UCTNS - System of a Unified Cadastral Trigonometric Network

SRB - Sulfate-Reducing Bacteria (sulfate reducing bacteria)

ČSN - Czechoslovak Technical Standard

STN EN ISO - Slovak Technical Standard with international validity

CTS - Corporate Technical Standard

Considering the large number of different existing metal pipelines in Slovakia (VHPS, VPS, MPS, LPN gas pipelines, oil pipelines, water pipelines and other product pipelines), the condition and service life of which depends, among other things, on the level of care for their cathodic protection, it is important to provide a comprehensive service in the field of care of these pipelines.

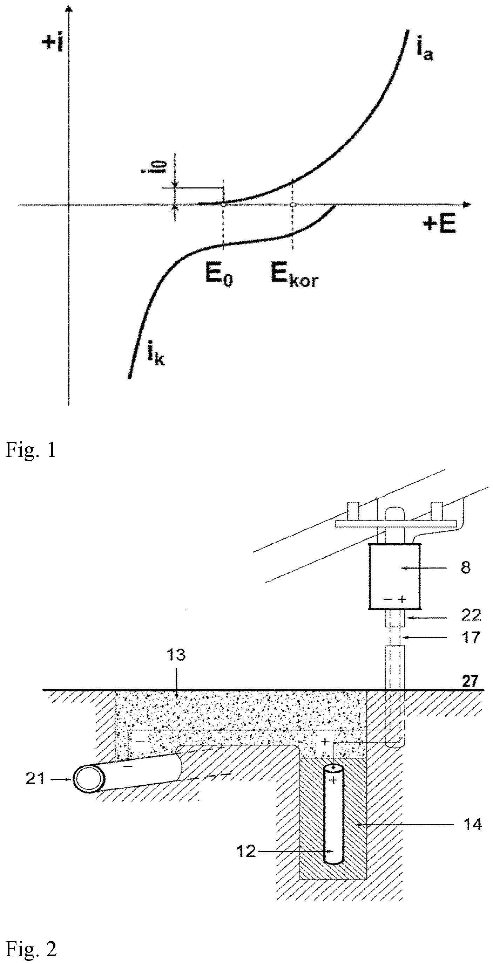

Cathodic protection is based on slowing down the anodic reaction and is achieved by shifting the potential of the metal in a negative direction, as shown in Fig. 1.

By shifting the potential E to negative values from the corrosion potential $E_{kor}$, a significant decrease in the corrosion rate is achieved at the value $E_0$, which we call the minimum protective potential. In the state ($E_0$), the current balance must also be maintained both $i_a$ on the anode (+ Electrode) and $i_k$ also on the cathode (- Electrode). This means that a current must be supplied to the system to stabilize the cathodic protection conditions in order to reach the current density $i_0$, which is called the minimum protection current density. In this way, the metal is stabilized and corrosion losses are negligible from a technical point of view. Cathodic protection - active protection is almost always used in combination with protective coatings - so-called passive protection, which significantly reduces the value of the polarization current to achieve the desired effect.

With a combination of passive and active protection, the protective coatings must be highly resistant to chemical and biological influences, non-porous, resistant to the electrical effects of direct current and alkalization of the environment, which is a consequence of cathodic protection. They are required to have good adhesion to metal, high electrical resistance, minimal absorption and impermeability to water and oxygen.

Cathodic protection is used to protect product pipelines and tanks buried in the ground, for reservoirs of water, electrolytes, etc. It can be applied in two ways:

1. Galvanic protection with so-called sacrificial (galvanic) anode (sometimes also called protector protection in professional practice)

This consists of the conductive connection of the protected metal with another metal, which has a significantly lower (more negative) potential in the given environment. This creates a galvanic cell in which the protected metal becomes the cathode (does not corrode) and the protective metal as the anode slowly dissolves. The protective current is obtained from a chemical dissolution reaction in which electrons are released. Since the dissolution of the anode is associated with a loss of its weight, it is also called a "sacrificial anode".

2. Protection by an impressed (external) current source (= impressed current CP system)

This is achieved by connecting an electrical source of DC protective current to the cathode (protected structure) - anode (auxiliary anode made of non-insulated steel or alloy material) circuit, which supplies a current of the required size, as shown in Fig. 2.

Anodes must meet the following requirements:

- the electrochemical force created by the connection of the protected and protective metal must be large enough to reach the largest possible protected area (applies only to protection with a galvanic anode);
- the protective potential must not be affected by anodic polarization or the formation of corrosion products;
- the loss of the anode should only reach the rate of production of the protective current;
- the material for the production of anodes must be cheap, easy to process and ecologically harmless.

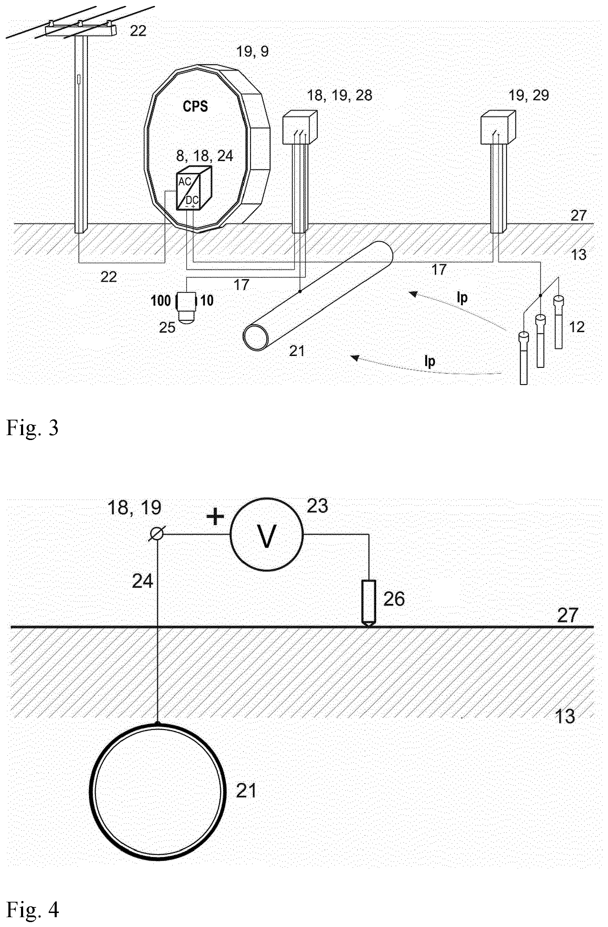

Fig. 3 schematically shows cathodic protection (CP) by an external current source and the connection of the main parts of the cathodic protection station (CPS), where its main parts are marked.

To measure the potential of a metal, reference electrodes are used in practice, whose potential is known and stable and which are easy to maintain, e. g., saturated non-polarizable copper electrode $Cu/CuSO_4$ (CSE; most often used for measuring the potential of steel pipes - soil), saturated calomel electrode $Hg/Hg_2Cl_2/KCl$ (SCE) used in laboratories, or silver chloride $Ag/AgCl/Cl^-$ for measurements in seawater. In Fig. 4 shows the scheme of measuring the potential of a steel pipe buried in the ground against the CSE reference electrode (STN EN 13509).

Measuring the potential between the metal structure and the soil is one of the basic steps of practical measurements used to assess the corrosion risk of the structure, or effectiveness of applied cathodic protection. This can be done if the potential is measured at the metal-electrolyte phase interface, i. e., in close proximity to the surface of the structure. In the case of industrial and line constructions, this is rarely possible, so it is important to eliminate as much as possible the factors influencing the size of the measured value.

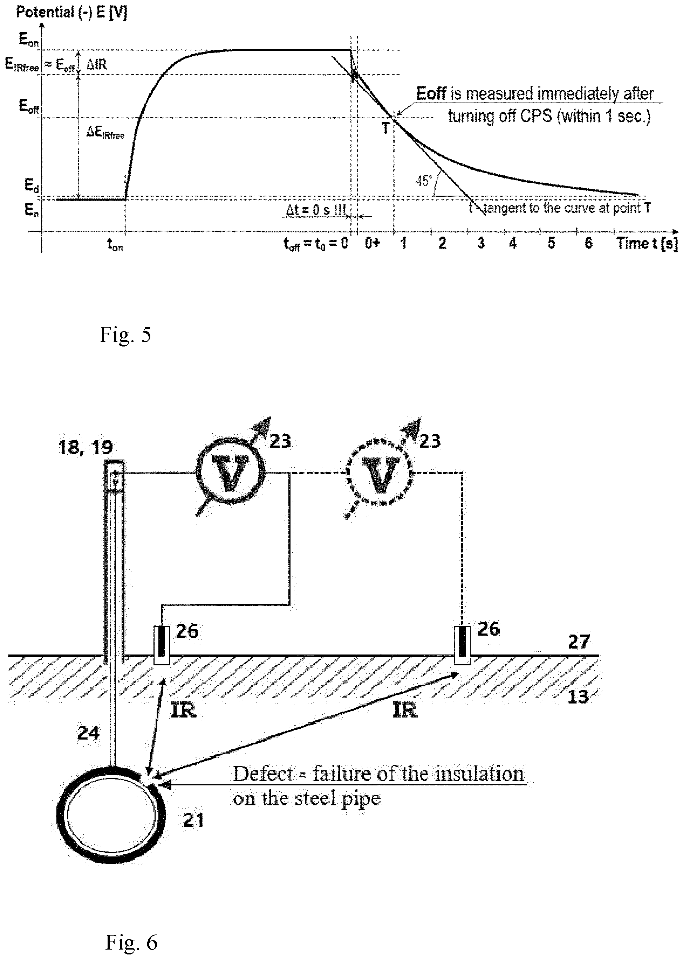

Among the basic designations of the potentials measured on metal structures are the following (see Fig. 5, Fig. 6):

$E_n$ - **Natural corrosion potential** of the given metal (structure) in the soil caused by corrosion processes without external polarization (for steel is $E_n$ = -0.52 V);

$E_{on}$ - **On potential** structure - soil (measured when CPSs are switched on);

The measured value contains the IR gradient, i. e., does not provide clear information about the level of protection of the structure. It is measured when all CPSs are in the state ON;

$$E_{on} = E_n + \Delta E_{IRfree} + \Delta_{IR}$$

$\Delta_{IR}$ - **IR drop** is the voltage drop included in the measured value of the potential, caused by the flow of the current of the external source I (cathode protection, stray currents) through the ohmic resistance R between the reference electrode inserted in the corrosion environment and the surface of the structure ($U = I \times R$);

$E_{off}$ - **Off potential** structure - soil (on old asphalt - bitumen insulations, measured most often within 1 sec. after turning OFF the CPSs, i. e., immediately after turning OFF the DC source, which causes polarization of the surface of the structure. Its value approaches the value of the polarization potential; $E_{off} \cong E_{IRfree}$). Its size determines the degree of protection against corrosion. It is measured when all CPSs are in the state OFF;

$E_{IRfree}$ - **Polarization potential** - it is the potential difference of the polarized surface of the structure compared to the reference electrode inserted in the corrosion environment, measured excluding the IR drop $\Delta_{IR}$;

$$E_{IRfree} \cong E_{off} = E_n + \Delta E_{IRfree} = E_n + \left(E_{off} - E_d\right),$$

where:

$\Delta E_{IRfree}$ - **Polarization shift,** i. e., potential change caused by the external polarization of the structure ($\Delta E_{IRfree} = E_{off} - E_d$; after a sufficiently long period of time after switching OFF the CPSs, the following applies: $\Delta E_{IRfree} = E_{off} - E_n$)

$E_d$ - **Potential after depolarization** - it is the difference between the polarization potential and the polarization shift measured after the end of the depolarization process (the potential is relatively stable); $E_d = E_{IRfree} - \Delta E_{Irfree}$.

**The criterion of a full-fledged CP** is such a change in the potential of the protected structure, which is sufficient to ensure the required corrosion rate in the given environment, taking into account the safety and the required lifetime of the protected equipment.

As for line constructions (pipes), the following CP criteria were most often used in the past (they are described in the now invalid ČSN, STN, as well as in the American regulations of NACE - National Association of Corrosion Engineers). The potential and current criteria under these standards are no longer valid and have only been partially replaced.

The protective potential $E_{off} \cong E_{IRfree}$ must correspond to the type of environment in which the pipe (made of carbon steel, low alloy steel, or gray alloy) is laid (in soil, water); (STN EN 12 954):

1. Aerobic environment: **Criterion of full protection** (so-called "lower limit"): (potentials shown against the CSE reference electrode)

a. Normal conditions (T < 40 °C)

$$E_{off} \leq \text{-0.85 V}$$

b. Conditions (40 C°< T < 60 °C) $E_{off}$ = linear interpolation between the $E_{off}$ value for T = 40 °C (i. e., -0.65 V, -0.75 V, - 0.85 V, -0.95 V) and the $E_{off}$ value for T = 60°C (i. e., - 0.95 V)
c. Environment with increased temperature (T > 60 °C)

$$E_{off} \leq \text{-0.95 V}$$

d. Aerated sandy soil with $100 < \rho < 1000$ $\Omega$m (T < 40 °C)

$$E_{off} \leq \text{-0.75 V}$$

e. Aerated sandy soil with $\rho > 1000$ $\Omega$m, (T < 40 °C)

$$E_{off} \leq \text{-0.65 V}$$

2. Anaerobic environment (no access to oxygen), presence of SRB

$$E_{off} \leq \text{-0.95 V}$$

3. In the place with the strongest cathodic polarization of the pipeline, the $E_{off}$ value must not be more negative than $E_{off}$ = -1.10V; (this so-called "upper limit" is the limit for the degradation (peeling) of the insulation from the pipe surface and for the so-called "hydrogen corrosion cracking" of the steel pipe).
4. Partial CP (for the case of economic operation of CPSs) - allows the application of an alternative criterion for the effectiveness of cathodic protection, if a polarization shift $E_{off}$ of 100mV is demonstrable by measurement (it must be excluded for operating conditions T > 40 °C, in soils containing SRB or where interference, balancing or telluric currents may occur).

**During the external diagnosis of metal pipes buried in the ground, the following are usually measured and checked:**

1. Laying out the diagnosed pipeline and measuring the depth of the pipeline (its coverage is calculated);
2. The condition (quality) of the insulation on the pipe measured by the DCVG method (Direct Current Voltage Gradient = Method of searching for insulation errors by measuring the voltage gradient of direct current). Locations of insulation faults are searched, their GPS coordinates are targeted, from which fault stationing is calculated; next, the size of the insulation error is measured in mV, which is converted to the size in %IR;
3. Measurement of switch-on and switch-off potential by the CIPS method (Close Interval Potential Survey = Measurement of potentials by the step method) at certain distances from each other (every 1.5 to 3 m and in the epicentres of insulation faults), with recording of the GPS coordinates of each measured point;
4. Targeting of all important points (e. g., position of the axis and depth of the pipeline, CP objects including above-ground accessible parts of the pipeline, insulation defects, $E_{off}$ / $E_{on}$ potential measurement points and ASR, possibly also pH, intersections with other pipelines, cables and communications, etc.), which is carried out during DCVG and CIPS measurements using differential GPS in ETRS-89 geodesic coordinates and subsequently transformed into the UCTNS system (system of the unified cadastral trigonometric network), and altitude in the Bpv system (Balt after levelling);

5. Apparent resistivity of the soil (ASR) by the Wenner method + pH of the surrounding soil = determining the aggressiveness of the environment near the pipeline;

6. Registration measurements checking the presence of direct stray currents and their influence on the pipeline;

7. Documenting the status of CP objects (i. e., CPSs, EUDs, EFDs, AS-JOs, DP-BOs, other COs, BOs, TPs, ...) (photos, wiring diagrams, functional/non-functional assessment, ...);

8. Measurement of CPSs ranges and potentials belonging to individual CPSs measured at all CP objects (CPSs, EUDs, EFDs, DP-BOs, IJs, COs, BOs, TPs), as well as potentials on accessible above-ground parts of pipelines (RSs, FSs, PCs, FITs, AMs, SRs, ...) on the entire diagnosed route of product pipelines and determination of critical points belonging to the failure of some CPS among all CP objects and accessible above-ground parts of the pipeline (i. e., those where the measured potential $E_{off}$ > -0.850 V).

In practice, according to known procedures, the measurement of CPSs ranges and potentials belonging to individual CPSs according **to point 8** was carried out in the past as follows:

COs, BOs, TPs are built permanently according to the situation and need on the route of the metal pipeline (next to protectors, isolating joints, in places of close parallels and in places of crossings with other metal pipelines, ...), but each no more than approx. 1 km $\pm$ 200 m due to the possibility of connecting with a measuring cable on the pipe when performing CIPS (Close Interval Potential Survey) measurements. They are mainly located near field, forest and asphalt roads. If they are placed in the field, there is a concrete ring around them to protect them from mechanical damage from agricultural machinery.

Switching ON and OFF CPS No. 1 to CPS No. n (distanced from each other by an average of 15-25 km) was carried out manually, i. e., such a number of workers was needed (there were a maximum of 5-6 people on one route) who were in contact with the person who performed measurements on individual CP objects, as well as on accessible above-ground parts of the pipeline, using radio transmitters, or using mobile phones.

Since the number of workers was limited and only a few CPSs were switched manually, the measurement of potential ranges in the CP objects, as well as on the accessible above-ground parts of the pipeline, was not completely accurate. It also depended on the time of subtraction of the measured potential value from the time of CPSs shutdown and was without automatic recording, i. e., the human factor was reflected in the enrolment results.

It was necessary to spend a lot of time and costs to carry out the measurement and transfer of workers: for driving cars on asphalt, field and forest roads, costs for workers' wages and fuel costs.

The disadvantages of existing solutions are that their effectiveness is insufficient and often time-limited. In addition, these measurement methods are demanding on material and human resources, as well as on the qualifications of workers, because the evaluation and interpretation of measured data requires the presence and professional assessment of an experienced expert with specific qualifications.

**The present invention**

Disadvantages of existing measurement methods are eliminated by the data collection and evaluation device and the method of data collection and evaluation related to the cathodic protection of product lines according to the present invention.

The system of GPS Interrupters may comprise programmable GPS Interrupters of the type T-3, manufactured and sold by the applicant (CORR-EL, s.r.o.), and the Device for measuring CPSs range and potentials may comprise a Device of the type ZDaP-2, manufactured and sold by the applicant, belonging to individual CPSs measured at all CP objects (CPSs, EUDs, EFDs, DP-BOs, IJs, COs, BOs, TPs), as well as these potentials on accessible above-ground parts of the pipeline (RSs, FSs, PCs, FITs, AMs, SRs, ...) on the entire diagnosed route of product pipelines and to determine critical points among all CP objects and above-ground parts of the pipeline. The point where the measured potential $E_{off}$ > - 0.850 V is considered critical.

This system of equipment includes fixed devices and portable devices that are electronically connected to communicate with each other and transfer data between them.

Fixed devices are Programmable GPS Interrupters, possibly of the type T-3, manufactured and sold by the applicant, placed in each CPS with reach to the diagnosed pipeline route in the number of n pieces, where n = number of CPSs on the inspected pipeline route.

Portable devices include a Programmable GPS Interrupters, possibly of the type T-3, manufactured and sold by the applicant, a Device for measuring CPSs range and potentials, possibly of the type ZDaP-2, manufactured and sold by the applicant, a 4-channel memory oscilloscope and data processing device equipped with a control program for the Device for measuring CPSs range and potentials ZDaP-2. In the following it is referred to the specific components manufactured and sold by the applicant, but obviously, components of other types and/or from other manufacturers may be used instead.

All fixed Programmable Interrupters type T-3 are individually programmed with respect to the associated CPS (its configuration profile differs from the others by only two parameters: the Interrupter sequence number and the Name of the clocked CPS. The portable GPS Interrupter type T-3 is adapted to synchronize the ZDaP-2 device with the fixed GPS Interrupters T-3 so that the fixed GPS Interrupters T-3 and the portable GPS Interrupter T-3 are synchronously controlled by the GPS time signal. The portable GPS Interrupter type T-3 is connected to the ZDaP-2 device using a serial line via a serial port (or Bluetooth technology), and the data processing device is electronically connected to the ZDaP-2 device for data transmission and processing.

Fixed GPS Interrupters type T-3 and portable GPS Interrupter type T-3 are auxiliary devices for measuring CPS ranges and $E_{off}$ and $E_{on}$ potentials on CP objects (i. e., in CPSs, EUDs, EFDs, DP-BOs, IJs, COs, BOs, TPs objects), as well as these potentials on accessible above-ground parts of the pipeline (RSs, FSs, PCs, FITs, AMs, SRs, ...) on the entire diagnosed route of product pipelines and determination of critical points among all CP objects and accessible above-ground parts of the pipeline - i. e., j. those where the measured potential $E_{off} > -0.850$ V. A 4-channel digital oscilloscope with built-in memory for registration measurement can be used as an oscilloscope.

As a device for data processing and evaluation, it is possible to use a PC or laptop equipped with OS MS Windows 10, the MS Excel program, as well as the control program for ZDaP-2.

The method of collecting, processing and evaluating data related to cathodic protection of product pipelines using the presented device includes the following steps:

- fixed GPS Interrupters type T-3 in the number of n units are programmed and then placed and connected to individual CPS numbers ($1 \div n$) and turned on, the name of the CPS object is assigned to each order of n fixed GPS Interrupters type T-3. The currently fixed GPS Interrupter type T-3 is individually programmed by setting its individual configuration profile (differs from the others only by two parameters: the Interrupter sequence number and the name of the clocked CPS, which is stored in the memory of the T-3 Interrupter before turning Off the T-3 Interrupter, while the ratio of time $T_{off}$ : period T is set approximately in the ratio of 1 : 3. After turning On the Interrupter T-3, the selected configuration profile starts and the fixed GPS Interrupters type T-3 automatically starts clocking with the set parameters;

- programmable Interrupters type T-3 permanently placed in the CPSs can be connected in two ways, depending on which rectifier is installed in the CPS:

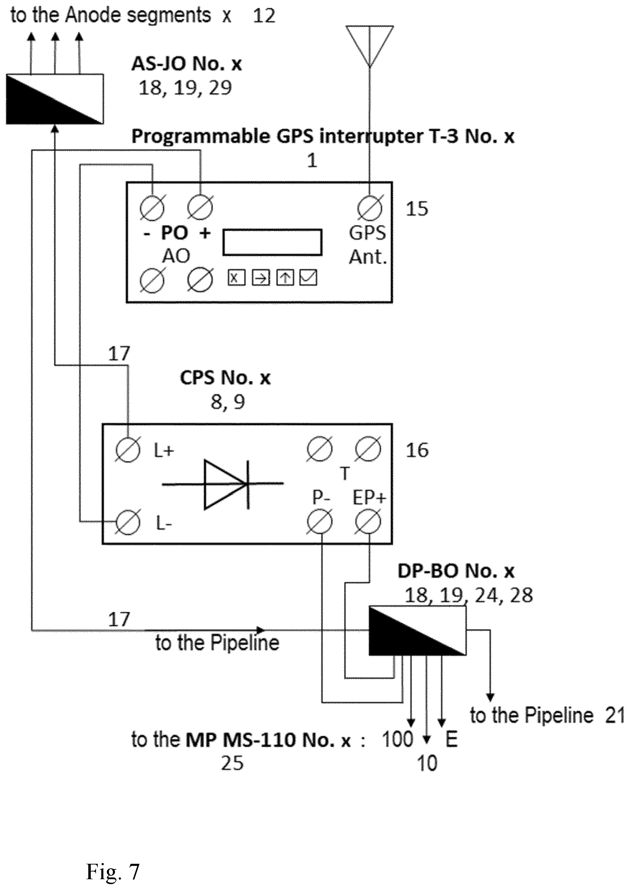

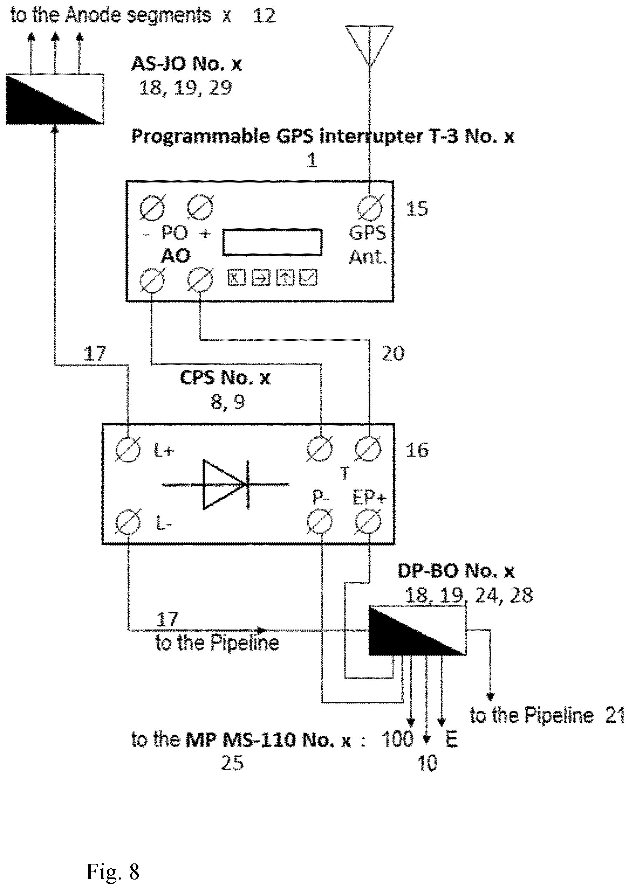

  - according to Fig. 7 - if the CPS **does not have** a control T-input ("T" = Clock input) for external switching OFF or ON of the output DC voltage
  - according to Fig. 8 - if the CPS **has** a control T-input ("T" = Clock input) for external switching OFF or ON of the output DC voltage

- the number of all GPS Interrupters type T-3 must be (n + 1), because one of them will be portable and will ensure the synchronization of the ZDaP-2 device with other GPS Interrupters type T-3. The portable GPS Interrupter type T-3, together with a 4-channel memory oscilloscope and a data processing device, are transferred during the measurement of ranges and potentials to individual CP devices, or to accessible above-ground parts of the pipeline on the measured route;

- the portable GPS Interrupter type T-3 is moved to the given CP measured objects (including CPSs No. ($1 \div n$)), or to accessible above-ground parts of the pipeline, together with a Device for measuring CPSs range and potentials, type ZDaP-2, a 4-channel memory oscilloscope and a data processing device equipped with a control program for ZDaP-2;

- then the portable GPS Interrupter type T-3 is programmed, connected to the ZDaP-2 device and powered On, synchronizing to the GPS signal, and the oscilloscope inputs are then connected to the equipment ZDaP-2. A data processing device is connected to the ZDaP-2 via the USB connector, and to the ZDaP-2 device, the corresponding cables leading to a terminal block in the given CP object, or to the accessible above-ground part of the pipe, are connected to its individual terminals in the measured CP object. These cables connect the ZDaP-2 Device to the measured object, e. g., to the terminal block of at least one of CPS, EUD, EFD, DP-BO, IJ, CO, BO, TP, ... The individual terminals in particular refer to the terminal marked as L+ (L-, MC, 100, 10, $E_{portable}$, $E_{built-in}$) e. g., in the CPS, and to the terminal marked as L+ (L-, MC, 100, 10, $E_{portable}$, $E_{built-in}$) of the ZDaP-2 Device;

- then the Equipment for measuring CPSs range and potentials, type ZDaP-2 is prepared by setting the parameters of the current date, time (including correction to UTC) and day of the week, timing parameters (pulse period T, OFF pulse width), number of fixed Interrupters T-3, the number of their repetitions, the order of the current fixed Interrupter T-3 which is in the order of clocking (from 1 to n), its corresponding name of CPS, and the inactive state of the other fixed GPS Interrupter type T-3 is set on it;

- then in the Device for measuring CPSs range and potentials, type ZDaP-2, the required moment of sampling the potentials $E_{off}$ and $E_{on}$ is set with a step of 10 ms, and then the measurement of the potentials $E_{off}$ and $E_{on}$ is started,

while simultaneously with this start in a 4-channel digital oscilloscope, as also in the data processing device, the measurement from the record is switched On;

- portable GPS Interrupter type T-3 controls the synchronization of the ZDaP-2 device with fixed Interrupters T-3 ($1 \div n$), and all fixed Interrupters T-3 and portable Interrupter T-3 are synchronously controlled by the GPS time signal;
- the portable GPS Interrupter type T-3 is connected to the device ZDaP-2, which displays information about the current parameters and settings of the device in BCD - code, which are subsequently written into the memory of the oscilloscope, the display of which also displays the measured potential waveforms in the CP object, or on the accessible above-ground part of the pipeline; the ZDaP-2 device still shows all the measured numerical values $E_{off}$ and $E_{on}$ on its display during the measurement, which are transferred and recorded to the data processing device, in which the data are later further processed and evaluated;
- after the end of the recording, the data are saved by the operator and the portable devices are turned Off;
- the ZDaP-2 device is disconnected from the CPS object, or from the accessible above-ground part of the pipeline;
- then the portable devices are moved to the next CP object in the sequence, and the measurement procedure on each CP object, or on the accessible above-ground part of the pipeline is repeated, until the end of the measurement on the last CP object of the diagnosed pipeline route.

In the ZDaP-2 device, setting of date, time (including correction to UTC) and current day of the week, setting of timing parameters (pulse period T, width of OFF pulse) and setting of the number of fixed Interrupters T-3, the number of their repetitions, the order of the just clocked GPS Interrupter type T-3, which is in the order of clocking and the name of the CPS assigned to it, and the inactive state of the non-clocked GPS Interrupter T-3 will be done either manually, or the setting is made automatically after connecting to the portable GPS Interrupter T-3, or even to the data processing device via serial port via a serial line, or via Bluetooth technology.

In the ZDaP-2 device, the desired moment of sampling the potentials $E_{off}$ and $E_{on}$ with a step of 10 ms is set from the time $t_{off} = t_o = 0$ sec, (i. e., from the moment = the beginning of the start time ($t_o$) of the measurement of the potential $E_{off}$,) and for the sampling time of the potential $E_{off}$ is set $t_{sample-off} = 0.10$ sec to 2.98 sec (for $T_{off} = 1$ to 3 sec.); for the sampling time of the $E_{on}$ potential, is set $t_{sample-on} = 2.95$ sec to 9.95 sec (for $T_{on} = 2$ to 9 sec).

In the ZDaP-2 device, the measurement of $E_{off}$ and $E_{on}$ potentials is automatically started only after the finishing of the set number of repetitions of the previous fixed GPS Interrupter type T-3 and after pressing the "START" button.

After the end of the recording in the given CPS, the ZDaP-2 device can optionally issue an audio signal about the end of the recording.

Digitally recorded outputs using ZDaP-2 device include the time diagrams of the waveforms of the depolarization potentials measured on each object CPS, EUD, EFD, DP-BOs, other COs, BOs, TPs, the recorded number of fixed GPS Interrupters T-3, the number of repetitions of the clocked fixed GPS Interrupter T-3, its order and the name of the CPS assigned to it, inactive the state of the other currently unclocked fixed GPS Interrupters T-3, as well as the recorded values of the potentials $E_{off}$, $E_{on}$, on the unloaded measuring cable core (marked MC) of the cable welded to the pipe and on test coupons of 100 cm$^2$ / 10 cm$^2$ against the built-in measuring probe MP and / or portable electrode ME for each measured object CPS.

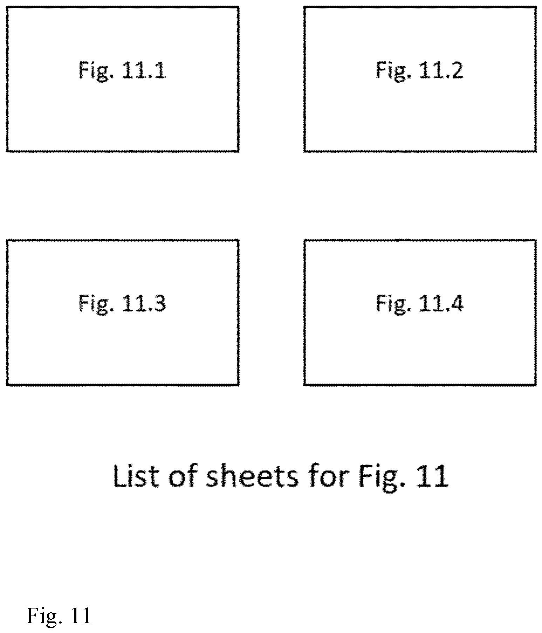

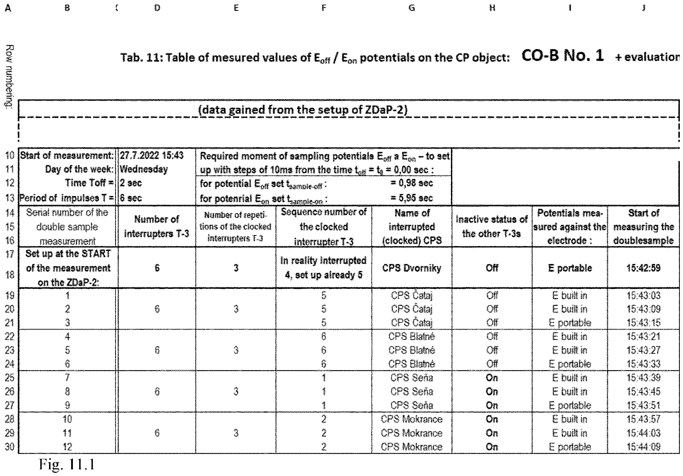

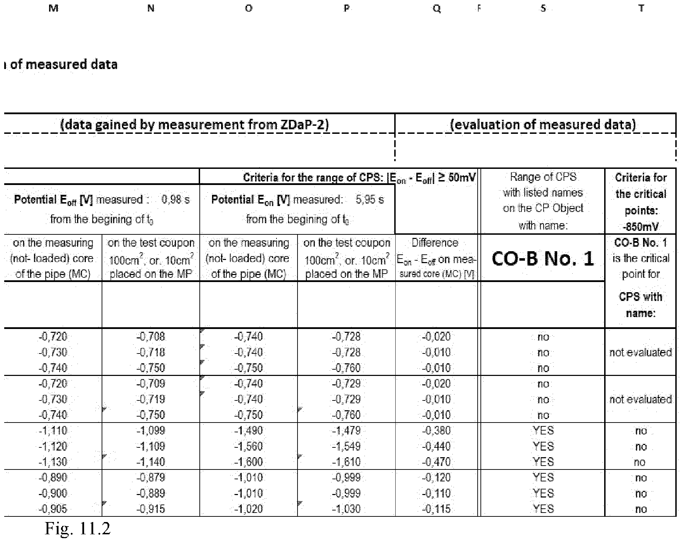

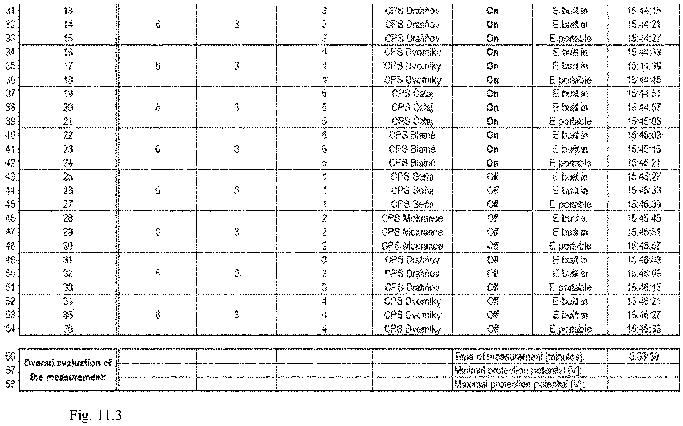

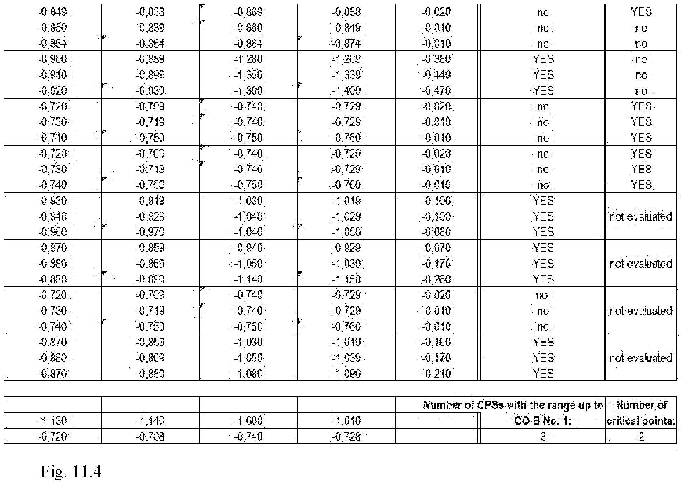

The ZDaP-2 device records the measured data $E_{off}$ / $E_{on}$ sampled at an adjustable time from the time $t_o$ = the start time of the $T_{off}$ duration with a step of 10 ms into a table in *.csv format, and after transferring the data to the data processing device, a file in *.xlsx format is created. After entering the evaluation criteria into the file *Evaluation of measurement data from ZDaP-2.xlsx* (see Fig. 11), the data processing device automatically evaluates the range of the corresponding CPS to the place where the corresponding measured object of the CP is located, as well as whether the evaluated measured the CP object, or the accessible above-ground part of the pipeline, is a critical point on the route and in case of failure of which CPS.

**Evaluation criteria (see Fig. 11):**

The criterion for evaluating the range of the respective CPS to the measured and evaluated CP object is the selected criterion absolute value $| E_{on\,MC} - E_{off\,MC} | \geq 50$ mV, the criterion for evaluating the critical point on the diagnosed route in case of failure of some CPS is the selected criterion: $E_{off\,MC} > -850$ mV. These criteria are embedded in the following formulas:

**1. Criterion for evaluating the range (or reach) of the relevant CPS** to the CP object to be measured and evaluated, or for the accessible above-ground part of the pipe, are the formulas (in lines 19 to 54):

In column Q: =IF(AND(ISNUMBER(M19);ISNUMBER(O19));(O19-M19);"incomplete input data"),

In column S: =IF(OR((H19="Off");(H19="On"));IF(ABS(Q19)>=$Q$11;"YES";"no");"no Off or no On"),

**while a constant of 0.050 V (i. e., the criterion) is stored in cell Q11** for determining the CPS range according to the formula: absolute value $| E_{on\,MC} - E_{off\,MC} | \geq 0.050$ V.

**2. The criterion for evaluating the critical point** on the diagnosed route in case of failure of any CPS is the formula (in lines 19 to 54):

In column T: =IF((H19="On");IF(M19>$T$11;"YES";"no");"not evaluated"),

**while in cell T11, the constant -0.850 V is stored** (i.e., the criterion) for determining the critical point of the failure of any CPS (listed in the relevant line) according to the formula: $E_{off\,MC} > -0.85$ V.

Note 1: The potentials $E_{on\,MC}$, $E_{off\,MC}$ must be measured on the terminal block of CP objects on the unloaded measuring cable core (marked MC) of the cable welded to the pipe!

Note 2: The evaluation criteria can be changed at certain intervals by the person who evaluates the measurement, depending on the environment and temperature in which the diagnosed pipeline is located (see Criteria of a full-fledged CP on page 5).

**Evaluation of measured data**

The portable Programmable GPS Interrupter type T-3 is an auxiliary device that, in cooperation with fixed GPS Interrupters type T-3 and with the help of a 4-channel portable oscilloscope and with the Device for measuring CPSs range and $E_{off}$ / $E_{on}$ potentials, type ZDaP-2, are displayed the following information and the waveforms of potentials measured in CP objects or on accessible above-ground parts of the pipe:

1. Waveform of output voltage from CPS
2. Clock from the GPS Interrupter type T-3 output + BCD-codes of: the number of Interrupters, the number of repetitions of the Interrupters, the order of the clocked Interrupter, the inactive state of the other non-clocked Interrupters
3. Waveform of the $E_{off}$ / $E_{on}$ potential on a test coupon with an area of 100 cm$^2$ / 10 cm$^2$ of the built-in measuring probe (MP) against the built-in (MP) and portable electrode (ME)
4. Waveform of the potentials $E_{off}$ / $E_{on}$ on the measuring core of the pipeline against the built-in and /or portable electrode
5. The value of the $E_{off}$ / $E_{on}$ potentials measured on CP objects or on accessible above-ground parts of the pipeline in an adjustable time (in steps of 10 ms) after the CPSs are turned OFF

All this information is written into the memory of the oscilloscope (except point no. 5) and into the data processing device in the form of a *.csv file (except points no. 3 and 4).
The Device for measuring CPSs range and potentials, type ZDaP-2 enables measurement and recording of data from CPS, waveforms of depolarization potentials $E_{off}$ / $E_{on}$ measured on test coupons of 100cm$^2$ and 10cm$^2$ located on the measuring probe MP and on the unloaded measuring cable core (marked MC) of the cable welded to the pipe in the memory of a 4-channel digital oscilloscope, in the BCD code also data on the set number of fixed Interrupters type T-3, the number of repetitions of the clocked T-3, the order of the clocked Interrupter T-3, and the name of the CPS assigned to it, on the inactive state of the other non-clocked Interrupters T-3, as well as information on built-in/portable electrode against which the listed potentials are measured.
In addition, ZDaP-2 device also allows measurement and writing of measured data $E_{off}$ / $E_{on}$ (sampled at an adjustable time from time $t_o$ = start time of duration $T_{off}$, $T_{on}$ with a step of 10 ms) into a table *.csv and after loading it into a file *Evaluation of measurement data from ZDaP -2.xlsx* in the data processing device and, after determining the evaluation criteria, automatically evaluate the range or reach of the relevant CPS to the place where the relevant measured (evaluated) CP object is located, or the accessible above-ground part of the pipeline, as well as determine critical points on the diagnosed route in the event of failure of any CPS.
The criterion for evaluating the range of the respective CPS to the measured and evaluated CP object is the formula $| E_{on\,MC} - E_{off\,MC} | \geq 50$ mV.
The criterion for evaluating the critical point on the diagnosed route in case of failure of any CPS is the formula: measured potential $E_{off\,MC} > -850$ mV.
The solution can also be applied to already existing modern rectifiers - switched sources placed in CPSs, which already contain a GPS receiver with the appropriate software due to the implementation of synchronous timing, or the solution can also be applied to already existing remote monitoring and control systems (with modified software, fitted with a GPS time signal receiver) aimed, among other things, at remote monitoring of CPS parameters ($U_{OUT}$, $I_{OUT}$, $E_{on}$) and remote setting of $U_{OUT}$, $I_{OUT}$, $E_{on}$ or for remote setting of timing parameters and to enable/stop timing at a preset date and time. The technical characteristics of modern rectifiers are e.g., the following: switching high frequency DC power supplies, high output current, low output voltage ripple, high efficiency, electronic adjustment of potential monitoring at the point of connection to the pipeline (= drain point), possibility of external clocking (with clocking input = T-inlet) with fast reaction time. The modified software is intended, for example, for devices CPS containing a GPS time signal receiver, to remotely monitor the CPS (9) parameters ($U_{OUT}$, $I_{OUT}$, $E_{on}$) and to remotely set them or to remotely set the clocking parameters ($T_{off}$, $T_{on}$) and to switch the clocking on/off at a set date and time.

**Advantages of the presented solution**

On the entire diagnosed route, it is necessary to use cars only once when measuring CPSs ranges and determining critical points, which saves fuel and workers' time; the environment is also protected in this way.

The results of the measurement are digitally recorded outputs: a time diagram of the waveform of the depolarization potential measured on each CP object, or on the accessible above-ground part of the pipeline + the recorded number of Interrupters, the number of repetitions of the clocked Interrupter, the order of the clocked Interrupter and its corresponding CPS name, the inactive status of the other non-clocked Interrupters, such as also the recorded values of the potentials $E_{off}$, $E_{on}$ on the measuring (unloaded) cable core (marked MC) of the cable welded to the pipeline and on the test coupons of 100 cm$^2$ / 10 cm$^2$ of the built-in MP against the built-in measuring probe MP and / or portable electrode ME for each measured object separately.

The solution provides the advantage of obtaining a large amount of highly accurate and automatically recorded data, as well as saving costs on manpower, technical equipment, fuel and time savings. In addition to accuracy, the resulting outputs are also clearly processed into a graphic form to make it easier for the operator to evaluate the measurement results.

**Overview of figures of drawings**

The present invention is explained in more detail with reference to the drawings:

Fig. 1 Diagram of a two-electrode cathodically protected system

Fig. 2 Cathodic protection of the pipeline implemented by an impressed source of protective current

Fig. 3 Connection and description of the main parts of the cathodic protection station (CPS)

Fig. 4 Scheme of measuring the potential of a steel pipe buried in the ground against the CSE reference electrode

Fig. 5 Waveform of the depolarization potential on the pipeline

Fig. 6 Influence of the location of the measuring electrode on the measured value of the potential metal structure - soil

Fig. 7 Connecting the GPS Interrupter to the CPS using the Power output PO, 100A - a fixed GPS Interrupter T-3 connected to the CPS, while the rectifier installed in the CPS does not have a control T-input for external switching ON or OFF of the output DC voltage

Fig. 8 Connecting the GPS Interrupter to the CPS using a non-powerful (Auxiliary) AO output - a fixed GPS Interrupter T-3 connected to the CPS, while the rectifier installed in the CPS has a control T-input for external switching ON or OFF of the output DC voltage

Fig. 9 An example of the placement of GPS Interrupters T-3 during the measurement of CPSs ranges and the corresponding potentials on the oil-pipeline route, as well as an example of the measurement of depolarization potentials in objects BO-CP Nr. 1 to BO-CP - Nr. 6 using the ZDaP-2 device

Fig. 10 Example of a time diagram of measured voltages and potentials stored by a 4-channel digital oscilloscope and recorded using a ZDaP-2 device

Fig. 11 Example of a table with the values of the measured potentials $E_{off}$, $E_{on}$ (in each measured object of the CP, as well as on the accessible above-ground parts of the pipeline on the diagnosed route) recorded using the ZDaP-2 device in a *.csv file and loaded into the MS Excel program, as well as in it evaluated

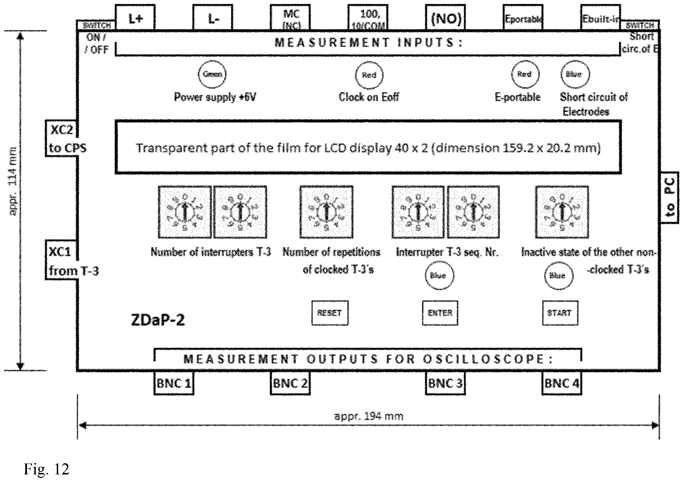

Fig. 12 Front panel of the Device for measuring CPSs range and $E_{off}$ / $E_{on}$ potentials, type ZDaP-2

**Examples of implementation**

In the following description of the various examples of procedures for measuring the ranges of CPSs (9) and the corresponding potentials, fixed and portable Programmable GPS Interrupters (1), (3) of the type T-3 and a Device for measuring CPSs range and $E_{off}$ / $E_{on}$ potentials (4) of the type ZDaP-2, both manufactured and sold by the applicant (CORR-EL, s.r.o.), are used., but obviously components of other types and/or from other manufacturers may be used instead for realizing the present invention.

**Example 1**

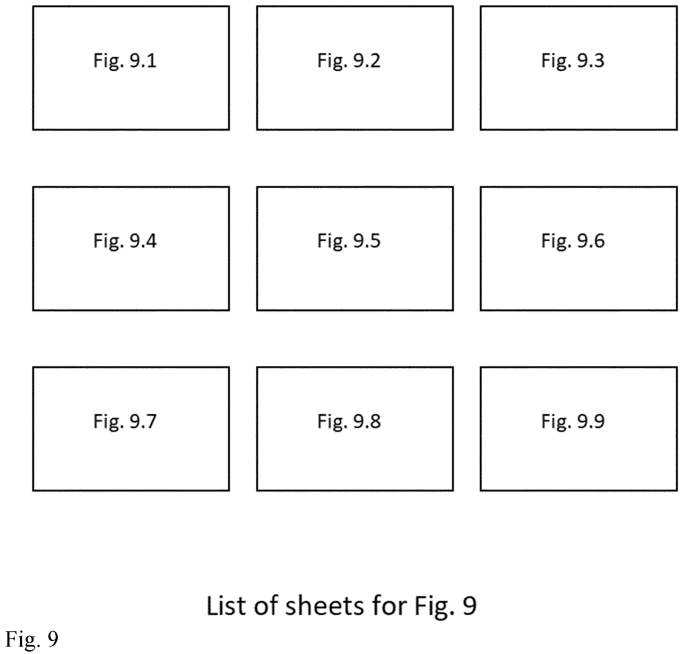

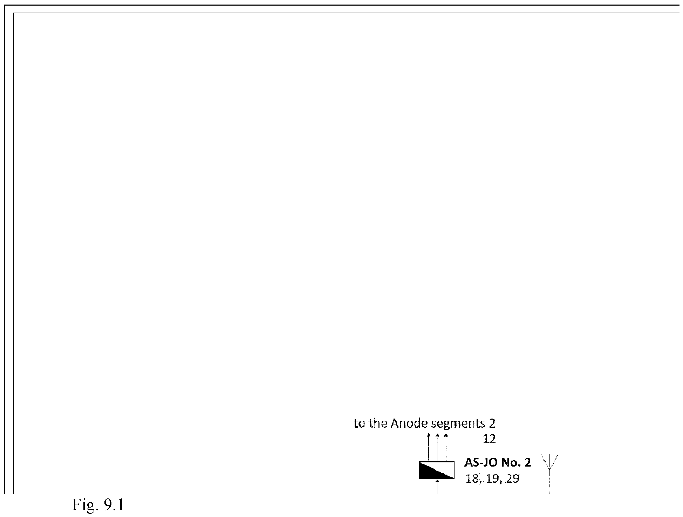

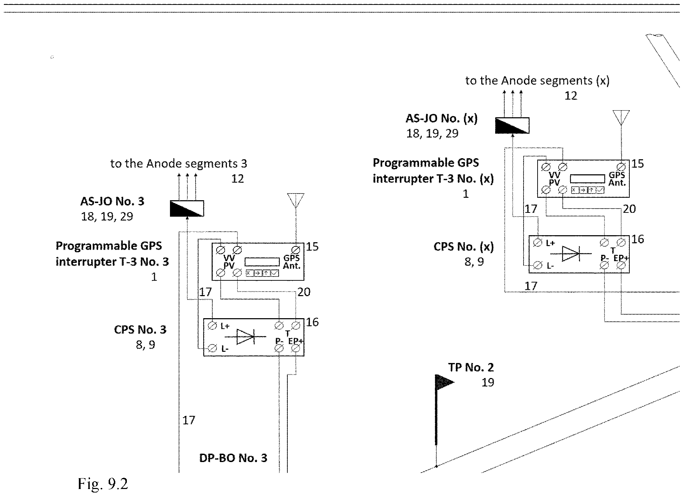

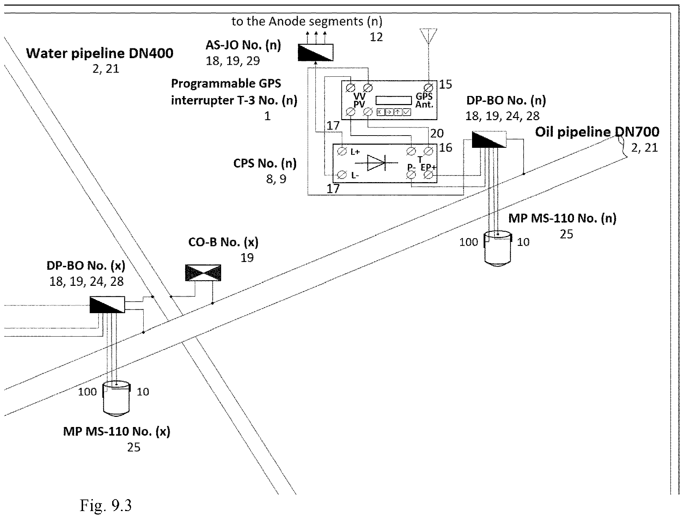

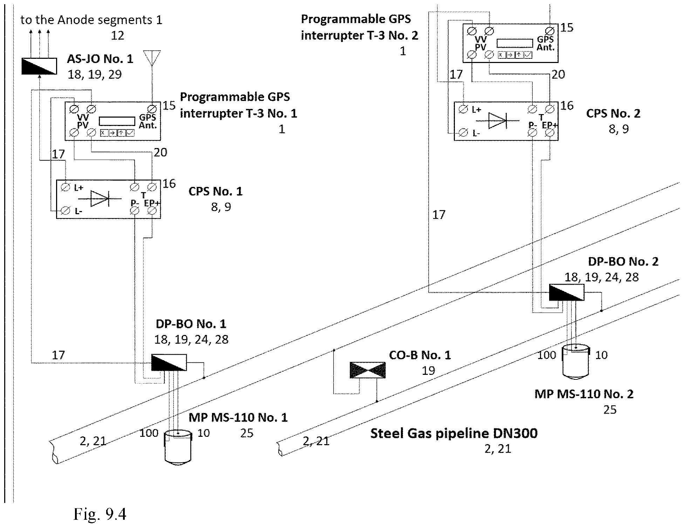

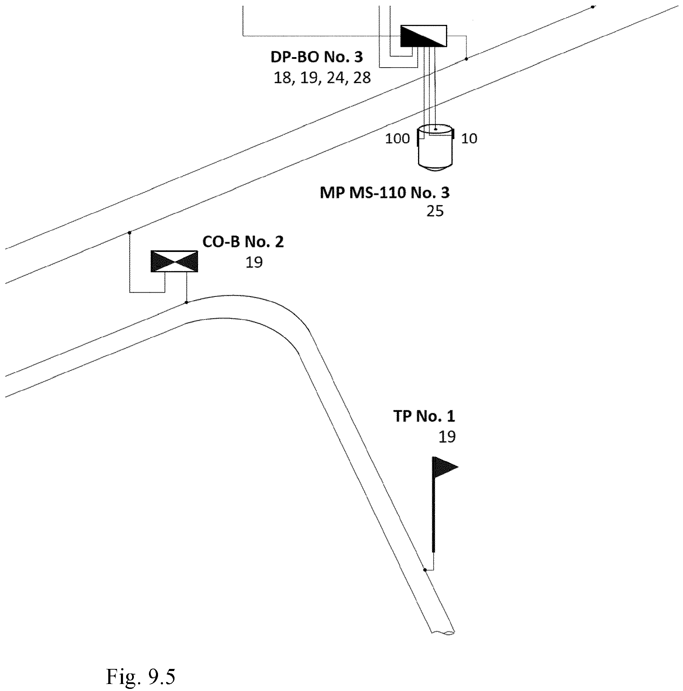

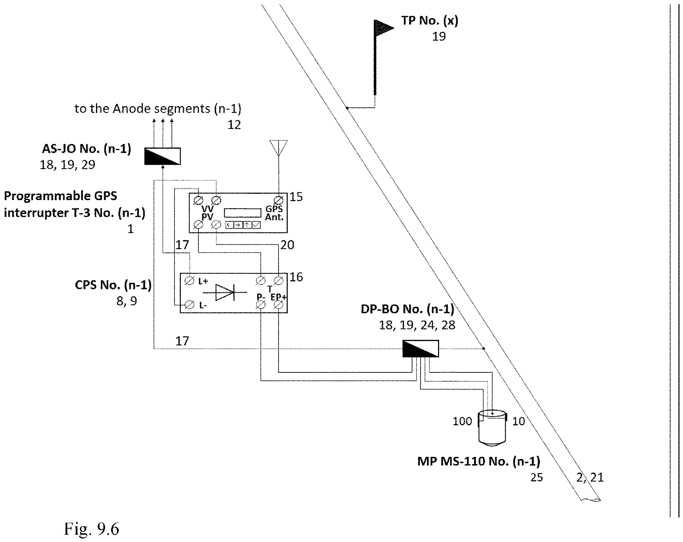

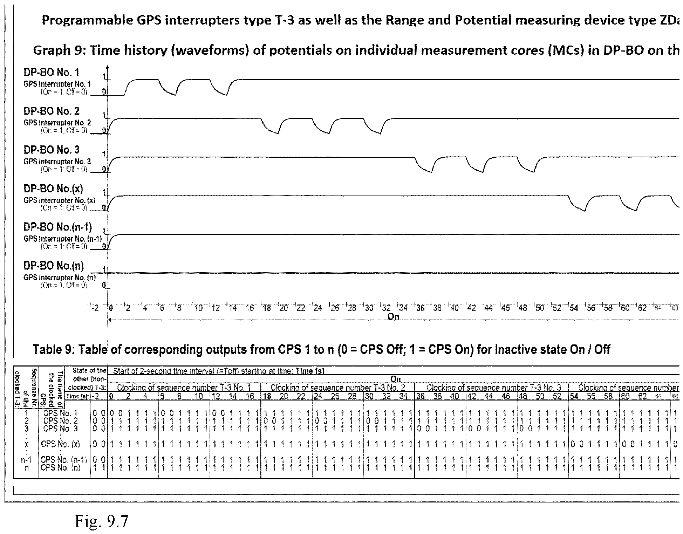

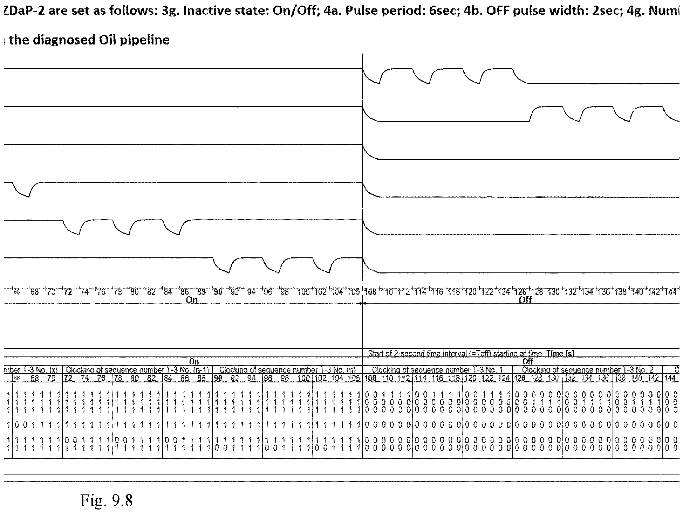

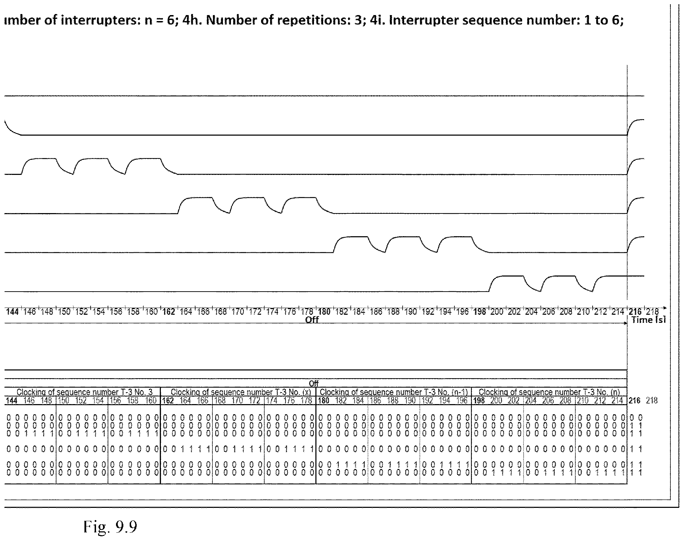

The arrangement for collecting and processing data related to the cathodic protection of product pipelines includes fixed devices and portable devices that are electronically connected for mutual communication and data transfer between them. Fig. 9 shows an example of the placement of GPS Interrupters T-3 during the measurement of CPSs ranges and their corresponding potentials on the oil-pipeline route, as well as an example of the measurement of depolarization potentials in objects BO-CP Nr. 1 to BO-CP Nr. 6 using the ZDaP-2 device.

Fixed devices are Programmable GPS Interrupters T-3 (1) and are placed in each CPS (9) with a range or reach to the diagnosed pipeline route (2) in the number of n pieces, where n = number of CPSs (9) on the inspected pipeline route (2).

Portable devices include a portable Programmable Interrupter T-3 (3), a Device for measuring CPSs range and potentials, type ZDaP-2(4), a 4-channel memory oscilloscope (5) and a data processing device (7) equipped with a control program for ZdaP-2 (4).

All fixed GPS Interrupters T-3 (1) are individually programmed with respect to the associated CPS (9) No. (1÷n). Its configuration profile differs from the others only by two parameters: the sequence number of the Interrupter and the name of the clocked CPS.

The portable GPS Interrupter T-3 (3) is adapted to synchronize the device ZDaP-2 (4) with the fixed GPS Interrupters T-3 (1), so that the fixed Interrupters T3 (1) and the portable Interrupter T-3 (3) are connected by accurate date and time synchronization using time signals from GPS satellites. The portable Interrupter T-3 (3) is connected to the ZDaP-2 device (4) using a serial line (or Bluetooth technology) (10), via the serial port (11), and the data processing device (7) is electronically connected to the ZDaP-2 device (4) for data transmission and processing.

A 4-channel digital oscilloscope with built-in memory (6) is used as an oscilloscope (5) for registration measurement.

The fixed GPS Interrupter T-3 (1) is a device causing interruption of the output current (turning OFF the voltage) from the CPS (9) used to measure the ranges of the CPSs (9) and the $E_{off}$ and $E_{on}$ potentials; thus, it serves for synchronous interruption of the protective current from the cathodic protection stations CPSs (9).

As a data processing device (7), a PC or laptop is equipped with the OS MS Windows 10, the MS Excel program, as well as the control program for ZDaP-2.

**The method for collecting, processing and evaluating data related to the cathodic protection of product pipelines using the presented device includes the following steps:**

- fixed GPS Interrupter T-3 (1) in the number of n pieces are programmed and then placed and connected to individual CPSs (9) number (1÷n) according to Fig. 7 or Fig. 8 and they are turned On; the name of the CPS object (9) is assigned to each order of n fixed GPS Interrupter T-3 (1);
- then the current fixed GPS Interrupter T-3 (1) is individually programmed when measuring the ranges of the CPSs (9) by setting its individual configuration profile (it differs from the others only by two parameters: the sequence number of the Interrupter and the name of the clocked CPS), which is then stored in the memory of the fixed Interrupter T-3 (1) before it is turned Off, while the ratio of time $T_{off}$ : period T is set in a ratio of approximately 1 : 3, and when the fixed Interrupter T-3 (1) is turned On, the selected configuration profile starts and automatically the clocking of the fixed Interrupter T-3 (1) with the set parameters is started;
- the portable GPS Interrupter T-3 (3) is moved to the given CP measured objects (19) (including CPS (9) No. (1÷n)), or to the accessible above-ground parts of the pipeline together with the Device for measuring CPSs range and potentials, type ZDaP-2 (4), a 4-channel memory oscilloscope (5) and a data processing device (7) equipped with a control program for ZdaP-2 (4), and then the portable Interrupter T-3 (3) is programmed, connected to the ZDaP-2 device (4) and turns On, while the Interrupter T-3 (3) is synchronized to the GPS signal, and the inputs of the memory oscilloscope (5) are then connected to the ZDaP-2 device (4), and a data processing device (7) is connected to the ZDaP-2 (4) via the USB connector, and to the ZDaP-2 device (4), the corresponding cables leading to a terminal block (18) in the given measured object CPS (9) No. (1÷n) are connected to its individual input terminals. (1÷n), or of the CP object (19), or on the accessible above-ground part of the pipeline, then the Device for measuring CPSs range and potentials, type ZDaP-2 (4) is set manually by setting the parameters of the current date, time (including correction to UTC) and the day of the week, then the timing parameters are set (pulse period T, OFF pulse width), the number of fixed GPS Interrupters T-3 (1), the number of their repetitions, the order of the actual (currently clocked) fixed Interrupter T-3 (1) which is in the clocking order from 1 to n, the name CPS belonging to it, and the inactive state of the other non-clocked fixed GPS Interrupters T-3 (1) will be set on the ZDaP-2 device (4);
- then in the Device for measuring CPSs range and potentials, type ZDaP-2 (4) the required moment of sampling the potentials $E_{off}$ and $E_{on}$ is set with a step of 10ms, and then the measurement of the potentials $E_{off}$ and $E_{on}$ is started, while at the same time with this Start it is in a 4-channel digital oscilloscope (5) as well as in the data processing device (7), the measurement with recording is switched On, while in the ZDaP-2 device (4) the measurement of the

$E_{off}$ and $E_{on}$ potentials is automatically started only after the set number of repetitions of the previous fixed GPS Interrupter T-3 has been completed after pressing the "START" button " (i. e., by hand);

- while the portable GPS Interrupter T-3 (3) controls the synchronization of the ZDaP-2 device (4) with the fixed Interrupters T-3 (1) (1÷n), and all fixed Interrupters T3 (1) and the portable Interrupter T-3 (3) are synchronously controlled by the GPS time signal, while the portable Interrupter T-3 (3) is connected to the ZDaP-2 device (4), which displays information on the current parameters and device settings in BCD code, which are subsequently written into the memory (6) of the digital oscilloscope (5), the display of which also displays the measured potential waveforms in the measured object CP (19), or on the accessible above-ground part of the pipe (2); the ZDaP-2 device (4) still shows all the measured numerical values $E_{off}$ and $E_{on}$ on its display during the measurement, which are transferred from it and recorded to the data processing device (7), in which the data are later further processed and evaluated;

- and after the end of the recording, the ZDaP-2 device (4) can optionally give an audio signal about the end of the recording, then the data will be saved and the portable devices will be turned Off.

The ZDaP-2 device (4) is disconnected from the CPS terminal block (9) or the CP object (19), or from the above-ground part of the pipeline, and the portable devices are then moved to the next CP object (19) in sequence, while the measurement procedure at each CPSs (9) No. (1÷n), or on the next CP object (19), or on each other accessible above-ground part of the pipeline (2) in sequence, repeats until the end of the measurement on the last CPS object (9), or on the last CP object (19) on the diagnosed pipeline route (2).

Then the output is processed by the data processing device (7) for determining the ranges of individual CPSs (9), as well as critical points among all CP objects (19) and accessible above-ground parts of the pipeline (2), whereas each CPS (9) (listed in the relevant row of the evaluation table *Evaluation of measured data from ZDaP-2.xlsx*) that meets the criterion for measured potentials in the evaluated measurement location is evaluated as CPS (9) with a range or reach to the given measurement location: $| E_{on\,MC} - E_{off\,MC} | \geq 50$ mV, and as a critical point belonging to the failure of any CPS (9) (listed in the relevant line), each CP object (19) that meets the criterion according to the formula:

$$\text{measured potential } E_{off\,MC} > \text{-850 mV is evaluated.}$$

In the ZDaP-2 device (4) there is a setting of the date, time (including correction to UTC) and the current day of the week, setting of clocking parameters (pulse period T, width of the OFF pulse) and setting of the number of fixed GPS Interrupters T-3 (1), the number of their repetitions, the order of the current fixed Interrupter T-3 (1), which is in the order of timing, the associated name CPS, and the inactive state of the other non-clocked Interrupters T-3 (1) performed either manually, or is performed automatically after connecting to a portable GPS Interrupter T-3 (3) via serial port (11), or Bluetooth technology (10).

**The following description and tables apply to fixed and portable Programmable GPS Interrupters T-3 in general:**

Programmable Interrupter type T-3 is intended for measurements in cathodic corrosion protection and is used for synchronous interruption of protective current from cathodic protection stations (CPS) during external diagnostics of underground steel pipe systems. Periodic switching ON and OFF of CPSs is required e. g., during intensive measurements, polarization potential measurements, insulation state (quality) measurements, CPSs, EUDs, EFDs range measurements, the effect of CPS failure, etc.

Synchronous switching is achieved by receiving time signals for example from the American Global Positioning System (GPS) satellites. GPS Interrupters type T-3 can switch a maximum current of up to 100A. With the external power semiconductor switch (PSS), it is possible to switch e. g., up to 1500V / 700A (e.g., with EUD clocking). Interrupters T-3 also have an auxiliary output, with which it is possible to switch CPSs rectifiers using a non-powerful "clocking input T" (e.g., modern NES Nová Dubnica switching power supplies). Older types (without T-inlet) include e. g., types St-34, Recural 02, Recural 03, KAT, SU, etc.

Since Programmable Interrupters type T-3 use time signals from GPS satellites in their operation, they are stable and reliable over time.

**Tab.1 Technical data of the Programmable GPS Interrupter type T-3 (1), (3):**

| Parameter | Value | Unit |
|---|---|---|
| Separate GPS antenna, with cable connection | 2.0 | m |
| Setting the optimal position of the GPS antenna using the signal strength information on LCD | | S0 to S3 |
| Output signal edge error (ON/OFF) when receiving satellites | max. ± 0.1 | ms |

(continued)

| Parameter | | Value | Unit |
|---|---|---|---|
| Edge error of the output signal in case of temporary loss of the GPS signal given by the temperature-compensated crystal built into T-3 when the temperature changes $\Delta t=20$ ºC | | max. $\pm$ 20/ 6 | ms/hours |
| **Power supply:** | | | |
| - power source (charger) | | 9* to 30/ max. 1.5 | VDC/A |
| - maintenance-free lead / lithium battery | | 6 or 12 / 7 or 12 | V/Ah |
| * The minimum supply voltage must be 3 V greater than the battery voltage in the Interrupter; the use of a 6 V battery allows it to be charged from a 12 V battery (using an Interrupter in a car) | | | |
| Standby **current consumption** | | $\leq$ 250 | μA |
| **Current consumption** during operation (with automatic consumption saving) | | $\leq$ 155 | mA |
| Operating time when powered from a lead-acid battery 6V / 12Ah | | min. 48 | hours |
| Maximum battery dimensions (length $\times$ width $\times$ height) | | 151x50x97.5 | mm |
| **Outputs** | - galvanically separated: | | |
| | - built-in Power Semiconductor Switch (PSS) with output: | 150/100 | V/A |
| | - auxiliary synchronized output (AO): | max. 30 / 20 | V/mA |
| (e. g., for CPS clocking, for power semiconductor switch module PSS up to 1000V / 100 to 400 A, for datalogger, etc.) | | | |
| Overvoltage and overcurrent protection built into the modules (the Interrupter is resistant to polarity reversal) | YES | | |
| **Protection** | IP 53 | | |
| **Working temperature range /** storage temperatures | -5 to +70 -30 to +85 | °C | |
| **Dimensions of the Interrupter with PSS** (with connectors, width $\times$ height $\times$ depth) | 200x181x95 | mm | |
| **Interrupter dimensions without PSS** (with connectors., width $\times$ height $\times$ depth) | 200x130x95 | mm | |
| Weight of the Interrupter with / without PSS (including Pb accumulator) | 3 300/ 2 500 | g | |

**The most important characteristics of T-3 type Programmable GPS Interrupters (1), (3):**

1) Clock synchronization ................................................................ from satellite GPS targeting system
2) Synchronization stability....................... corresponding to the time stability of the so-called "atomic normal", i.e., time signal transmitted from GPS satellites
3) Control unit ...................................................................... STM32F769I microprocessor
4) Controlling and setting parameters via MENU ................................................. 4 - button keyboard
5) Display unit .................................................................. alphanumeric LCD display 16 $\times$ 2 characters with the option of automatically turning Off the display after 10 minutes of keyboard inactivity
6) Data shown on the display ................................... date, local exact time, battery status, the number of captured satellites, the time course of the ON/OFF output pulse, the order of the Interrupter, synchronization status, time of last synchronization (or synchronization failure), geographic coordinates, altitude, user MENU, etc.

7) Adjustable parameters:

a) The period and interval of output pulses of the T-3 Interrupter can be freely set within the following limits:

i) pulse width $T_{off}$: 0.01 sec. up to 0.99 sec., step 10 ms + 1 sec. up to 9999 sec., step 1 sec.
ii) pulse period T ($T_{off} + T_{on}$): 1sec. up to 9999 sec., step 1 sec.

b) Delay of the OFF state of the auxiliary and power output relative to the PPS signal: (0 to 99.99 sec., step 10 ms)
c) Delay of the ON state of the auxiliary and power output relative to the PPS signal: (0 to 99.99 sec., step 10 ms)
d) Date and time of the start and end of the activity of the Interrupter
e) Enabling / disabling operation on individual days of the week (Y/N)
f) Start and end time of daily operations (i. e., beginning and end of working hours)
g) Correction of local time against the UTC reference time (0 to 23 hours)
h) Simultaneous or sequential switching of several Interrupters (all at once or individually sequentially)
i) Settings in sequential switching mode: number of Interrupters, the sequence number of the currently clocked Interrupter, the name of the clocked CPS assigned to the sequence, number of repetitions of clocked Interrupter, inactive status of non-clocked T-3 Interrupter (suitable for measurements when determining the range of individual CPS in the diagnosed area)
j) Enabling / disabling the operation of the power output 100A
k) Inverting the function of the auxiliary output or/and power switch 100A in active and inactive condition
l) Enabling acoustic signalling operation in different modes: OFF state (Y/N), non-standard states: GPS failure (Y/N), battery discharge (Y/N)
m) Setting one of the 4 levels of enabling the Interrupters operation depending on the quality of the GPS signal: from the best reception (S3) to operation on its own built-in crystal (S0 - in case of a complete failure of GPS synchronization)
n) Option to choose one of 4 timing presets (profiles) (3 user adjustable: DCVG_1, DCVG_2, MoData2/3; 1 fixed: Factory_3)
o) The presence of a two-way serial port (modified RS232 + Bluetooth) for T-3 communication with a PC when setting timing parameters, names of clocked CPSs, or with the ZDaP-2 device

**The procedure for measuring the ranges of CPSs (9) and the corresponding potentials using T-3 Interrupters (1), (3) and the Device for measuring CPSs range and $E_{off}$ / $E_{on}$ potentials, type ZDaP-2 (4)**

The prerequisite for the measurement is the correct setting of all T-3 type Interrupters (1), (3), as well as Device for measuring CPSs range and potentials, type ZDaP-2 (4). The basic premise of this measurement is the perfect compatibility of the software of both these devices (all Interrupters are synchronously controlled by the GPS time signal and the portable T-3 Interrupter (3) transmits information about the currently clocked fixed T-3 Interrupter (1) to the ZDaP-2 device (4) using a serial line (or Bluetooth) (10).

The measurement of CPSs (9) ranges is carried out when all clocked CPSs (9) are set to manual control mode with unchanged operating parameters ($U_{OUT}$, $I_{OUT}$, $E_{on}$) and when all terminals in all COs, BOs are connected to the normal operating state.

Setting the T-3 Programmable GPS Interrupters (1), (3) is very simple, as it is only necessary to select the appropriate configuration profile called MoData2/4 in the device MENU and correctly set the items no.: 3., 3a., 3g., 4a., 4b., 4g., 4h., 4i., 4i.a, 4i.b, 4i.c and 4j. according to Tab. 2:

**Tab. 2 Setting configuration profiles of T-3 Interrupters (1), (3) for measuring CPSs** ranges:

| 3. | Measuring CPSs Ranges | YES |
|---|---|---|
| 3a. | Active profile | MoData2/4 |
| 3g. | Inactive status | ON, or ON / OFF |
| 4a. | Pulse period T [s] | minimum 2, maximum 9 |
| 4b. | OFF pulse width [s] | minimum 1, maximum 3 |
| 4g. | Number of Interrupters = n (= number of clocked CPSs) | 1 to 99 |
| 4h. | Number of repetitions | 1 to 9 (optimally $\geq$ 5) |

(continued)

| 4i. | The sequence number of the currently clocked Interrupter (= Interrupter sequence number) | 1 to 99; in the specific case mentioned later: in the case of 13 own CPSs + 26 foreign CPSs =**39** | |
|---|---|---|---|
| 4i.a | The name for the sequence of the assigned clocked CPS (= The name of the clocked CPS) | e. g., 1 - CPS Seňa | |
| 4i.b | When measuring CPS ranges, clock from Order No. (including) | 1 | |
| 4i.c | When measuring CPS ranges, clock up to Order No. (including) | e. g., 17 (if we have 18 pcs T-3 (3) available) | |
| 4j. | Correction to UTC [hours] | 2 | 1 - winter time; 2 - summer time |

Then the changed configuration profile must be saved. A new save is necessary because in the event of a power failure (230V / 6V), the Interrupter T-3 (1), (3) will be turned On again and the last saved data will be loaded.

It is important that the ratio of time $T_{off}$: period T is set at approximately 1 : 3.

Then the parameters are written to the active profile with the "ENTER" key in the MENU before turning Off the Interrupter.

This is followed by the selection of the desired profile (MoData2/4) - in item 3a. it must be selected and confirmed with the "ENTER" key, then turn Off the Interrupter, and after turning On the Interrupter again, the selected profile will start. Clocking with the set parameters starts automatically after turning On the Interrupter T-3 (1), (3), or after exiting the MENU.

Programmable GPS Ints T-3 (1), (3) are set according to the following general table:

**Tab. 3 Configuration parameters of the T-3 type Programmable GPS Interrupter:**

| | CONFIGURATION PROFILES: | Factory_3 | DCVG_1 | DCVG_2 | MoData2/4 |
|---|---|---|---|---|---|
| 1. | **Dates** | | | | |
| 1a. | Start date | 01.01.2000 | | | |
| 1b. | Stop date | 31.12.2099 | | | |
| **2.** | **Times** | | | | |
| 2a. | Start time | 00:00 | | | |
| 2b. | Stop time | 23:59 | | | |
| 2c. | Start of working hours | 00:00 | 07:00 | | |
| 2d. | End of working hours | 00:00 | 21:00 | | |
| **3.** | **Settings** | | | | |
| 3. | Measuring CPSs Ranges (= simultaneous or sequential switching of Interrupters T-3) | No | No | No | Yes / No |
| 3a. | Active profile (as the only parameter, it is automatically written when the Interrupter is turned Off; the settings of the other profiles are written only after pressing "ENTER" before turning Off) | Factory_3 | DCVG_1 | DCVG_2 | MoData2/4 |
| 3b. | Acoustic signalling of switching | Output 1 = Power Output (PO) or Output 2 = Auxiliary Output (AO) | | | |
| 3c. | GPS outage acoustic signalling | Yes | | | |
| 3d. | Acoustic signalling of battery discharge | Yes | | | |
| 3e. | Automatic display shutdown after 10 min. | No | Yes | | |
| 3f. | Minimum GPS receiver synchronization | None | PPS | PPS | None |

(continued)

| 3. | **Settings** | | | | |
|---|---|---|---|---|---|
| 3g. | Inactive state of the other Interrupters | ON (ON / OFF when measuring CPSs ranges) | | | |
| 3h. | Inverting of Output 1 (Power - PO) | No | | | |
| 3i. | Inverting of Output 2 (Auxiliary - AO) | Yes | Yes | | |
| 3j. | Power output enabled | Yes | | | |
| 3k. | Monday | Yes | | | |
| 3l. | Tuesday | Yes | | | |
| 3m. | Wednesday | Yes | | | |
| 3n. | Thursday | Yes | | | |
| 3o. | Friday | Yes | | | |
| 3p. | Saturday | Yes | | | |
| 3q. | Sunday | No | | | |
| **4.** | **Parameters** | | | | |
| 4a. | Pulse period T [s] | 3 | 1 | 2 | 6 |
| 4b. | OFF pulse width [s] | 1 | 0 | 1 | 2 |
| 4c. | Delay 1 OFF [ × 100 ms] | 0 | | | |
| 4d. | Delay 1 ON [ × 100 ms] | 0 | 65 | 35 | 0 |
| 4e. | Delay 2 OFF [ × 100 ms] | 0 | | | |
| 4f. | Delay 2 ON [ × 100 ms] | 0 | 65 | 35 | 0 |
| 4g. | Number of Interrupters = n (= number of clocked CPS) | 1 (1 to 99 when measuring ranges) | | | |
| 4h. | Number of repetitions of clocked Interrupter | 3 | 5 (1 to 9) | | |
| 4i. | The sequence number of the currently clocked Interrupter (= Interrupter sequence number) | 1 (1 to 99) | | | |
| 4i.a | The name for the sequence of the assigned clocked CPS (= The name of the clocked CPS) | e.g., 1 - CPS Seňa | | | |
| 4i.b | When measuring CPS ranges, clock from Order No. (including) | 1 | | | |
| 4i.c | When measuring CPS ranges, clock up to Order No. (including) | 17 (we have 18 T-3 Interrupters available) | | | |
| 4j. | Correction to UTC [hours] | 2 | 1 - winter time; 2 - summer time | | |
| **5.** | **Usernames** (Profiles) | | | | |
| 5.a | Name of User Profile 1 | DCVG_1 | | | |
| 5b. | Name of User Profile 2 | DCVG_2 | | | |
| 5c. | Name of User Profile 3 | MoData2/4 | | | |
| 5d. | Name of the Production Profile (it is not recommended to change it) | Factory_3 | | | |

The Device for measuring CPSs range and $E_{off}$ / $E_{on}$ potentials, type ZDaP-2 (4) is set as follows:
A light test of all segments (characters) on the LCD display, switches and buttons on the front panel - switchable On/ switchable Off, before turning On the ZDaP-2 device (4) is performed.
The date, time (including correction to UTC) and the current day of the week (Monday, Tuesday, ..., Sunday) are then set.

The timing parameters are set (pulse period T, OFF pulse width).

Setting the number of fixed Interrupters type T-3 (1), the number of their repetitions, the order of the currently clocked T-3 Interrupter (1) which is in the clocking order and the name of the CPS assigned to it (9), and its inactive state.

All these settings are made automatically after connecting the ZDaP-2 device (4) to the portable Interrupter type T-3 (3), possibly also to the data processing device (7) via the serial port (11) via the serial line (10), via Bluetooth technology (10), or manually.

Setting the desired moment of sampling of the potentials $E_{off}$ and $E_{on}$ with a step of 10ms - it is set from the time $t_{off} = t_o = 0$ sec (i. e., from the moment = the beginning of the start time ($t_o$) of the measurement of the potential $E_{off}$); for the potential sampling time $E_{off}$, set $t_{sample-off} = 0.10$ sec to 2.98 sec (for $T_{off} = 1$ to 3 sec); for the sampling time of the $E_{on}$ potential, set $t_{sample-on} = 2.95$ sec to 9.95 sec (for $T_{on} = 2$ to 9 sec).

Then the measurement is started with the "START" button. In order for the measurement to start correctly, in fact, the measurement is automatically started only after the finishing of the set number of repetitions of the previous fixed Interrupter T-3 (1), during clocking of which the "START" button was pressed.

The programmed fixed GPS Interrupters type T-3 (1) are placed and plugged into the individual CPSs (9) and are turned On; to each order of the T-3 Interrupter (1) is assigned the name of the CP object (19) (eg: **Order 1 =** CPS Seňa, **Order 2** = CPS Mokrance, **Order 3** = CPS Drahňov, **Order 4** = CPS Dvorníky, etc....)

| 4i. | The sequence number of the currently clocked Interrupter (= Interrupter sequence number) | 1 to 99 |
|---|---|---|
| 4i.a | The name for the sequence of the assigned clocked CPS (= The name of the clocked CPS) | e.g., 1 - CPS Seňa |

In this case, the rectifier (8) installed in the CPS (9) has a control T-input ("T" = Clock input (16)) for external switching ON or OFF of the output DC voltage (Fig. 8).

When using the GPS Interrupters type T-3 (1), it is necessary to switch the rectifier (8) from automatic to manual control mode (with the same output parameters **$U_{OUT}$, $I_{OUT}$**, $E_{on}$ set), in order to prevent unwanted transients and the states at the output of the rectifier (8) due to self-regulation of the potential due to the influence of the permanently built-in measuring probe MP (25). The GPS Interrupter T-3 (1) generally always interrupts the supply to the pipe (2) and not to the anode (12) due to the possible influence of the potential on the pipe (2) through transient events when the CPS (9) is turned OFF / ON.

The portable GPS Interrupter T-3 (3) is programmed as follows: (it should be remembered that the sequence number of the currently clocked fixed Interrupter T-3 (1) is shown on its display, including the name of the assigned clocked CPS):

| 4i. | The sequence number of the currently clocked Interrupter (= Interrupter sequence number) | for example: 1 |
|---|---|---|

The portable GPS Interrupter T-3 (3), which will ensure the synchronization of the ZDaP-2 device (4) with other T-3 (1), is connected to the left side of the ZDaP-2 device (4) on the XC1 terminal and turns ON - on the signal GPS will synchronize within 2 to 8 minutes, depending on the number of received satellites.

The clock input (16) of the rectifier (8) is connected to the left terminal XC2 of the ZDaP-2 device (4). The inputs of the 4-channel digital oscilloscope (5) are connected to the connectors BNC1 to BNC4 on the lower side of the ZDaP-2 device (4).

A data processing device (7) is connected to the USB connector on the right side of the ZDaP-2 device (4), in this case a laptop equipped with the OS MS Windows 10, the MS Excel program as well as the ZDaP-2 control program.

On the upper side of the ZDaP-2 device (4), in the holes (Ø 4 mm) in CPSs (9) No. (1÷n), or in the CP object (19), connect the corresponding cables (17) leading to the terminal block (18) in the CPS (9) or the CP object terminal block (19) to the individual terminals. Corresponding cables are also connected to the same terminals of the ZDaP-2 device (4) when measuring on accessible above-ground parts of the pipeline. It is necessary to make sure that the markings on the ZDaP-2 device (4) and on the terminal block (18) match.

The measurement parameters are set on the ZDaP-2 device (4) and the measurement is started; at the same time, the measurement with the recording starts on the digital oscilloscope (5) as well as on the notebook (7).

After the end of the recording, ZDaP-2 device (4) will give a sound signal about the end of the recording, the measured data will be saved. The measured waveforms of the potentials from the oscilloscope (5) are processed into a file that is saved on a USB, or we also back it up on a laptop (7). The portable devices are then turned Off.

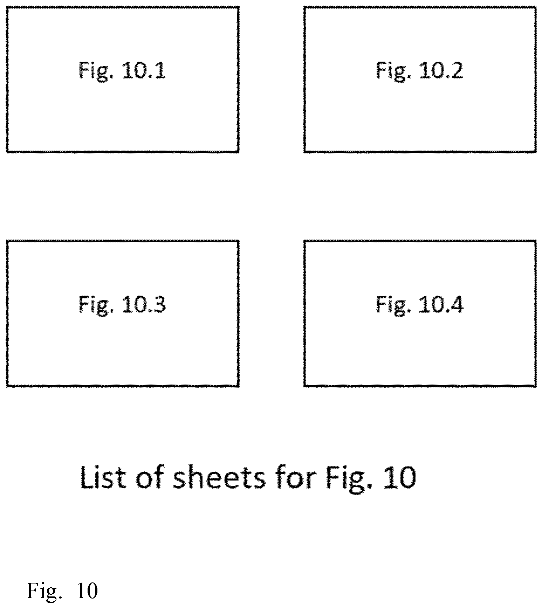

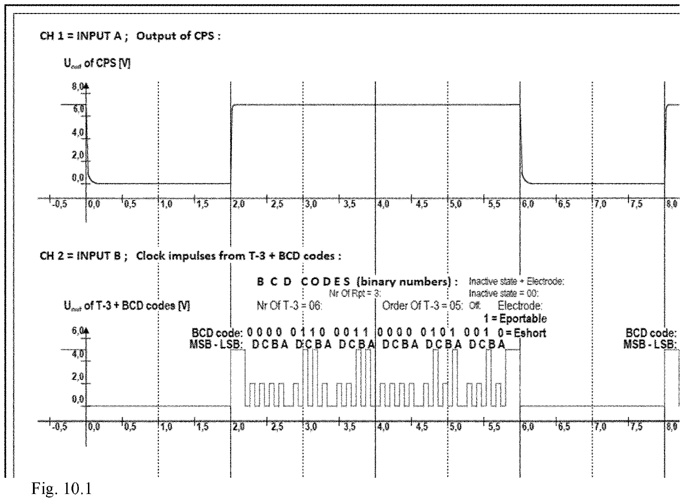

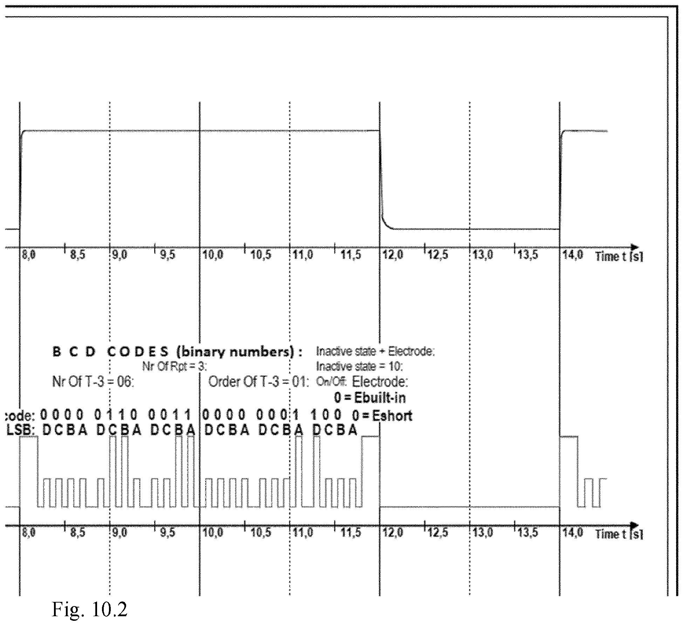

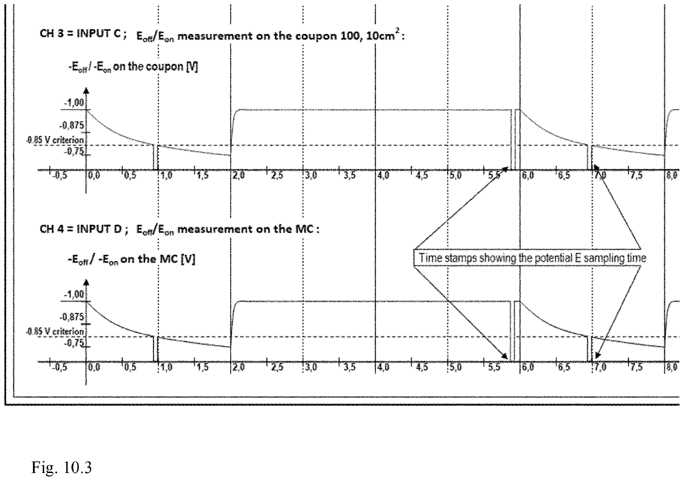

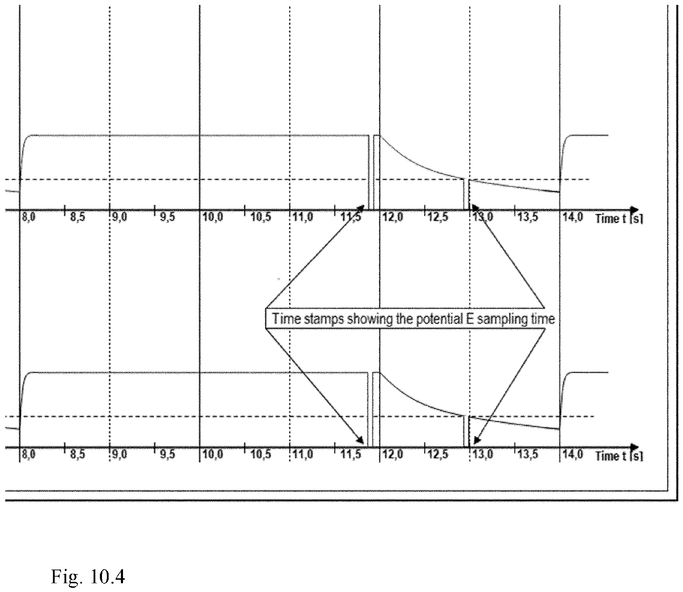

An example of measurement outputs is shown in Fig. 10 and Fig. 11.

After disconnecting the device ZDaP-2 (4) from CPS (9) No. 1, portable devices are moved to another CP object (19) (CPS, EUD, EFD, DP-BOs, other COs, BOs, TPs...), or to an accessible above-ground part of the pipeline.

After moving to the next CP object (19) in the sequence, the measurement procedure is repeated and continues until the end of the measurement on the last CP object (19) of the diagnosed pipeline route (2).

**Note 1:** If we suspect that the measured $E_{off}$ / $E_{on}$ potentials do not correspond to reality - for example, because the previous inactive state of all CPSs (9) was in the OFF state for too long, we can artificially insert an "empty" clock called "All CPSs are ON" between the inactive OFF / ON state, i.e., time period with duration $T_{off}$ / $T_{on}$ = number of repetitions $\times$ period T [s], during which all clocked CPS (9) will be in the ON state as follows:

The name of the CPS object (9) will be assigned to each order of Interrupter T-3 (1), while **Order No. 1** = will not be occupied, and all others will already be occupied - e. g., **Order No. 2** = CPS Seňa, **Order No. 3** = CPS Mokrance, **Order No. 4** = CPS Drahňov, **Order No. 5** = CPS Dvorníky, etc., ...).

**Note 2:** Until now, we have assumed that we have at our disposal such a number of fixed T-3 Interrupters (1) that will cover the entire route of the diagnosed product line (e. g., with a length of 94.8 km). On such a long section, however, it is necessary to clock e. g., 13 of our own (from the point of view of the pipeline operator) and approx. 26 of foreign CPSs (9) (these are real numbers!). However, if we only have e. g., 17 pcs of T-3 GPS Interrupters (1) and 1 pc of T-3 GPS Interrupter (3), we will measure the ranges of all CPSs (9) on the entire 94.8 km route 3 times by gradually setting the T-3 parameters in three steps as follows:

(1) The first setting for measuring ranges on Section No. 1 (it is assumed that the names CPS No. 1 to CPS No. 17 are already assigned to each fixed Interrupter T-3 (1) sequence No. 1 to No. 17):

| 4i. | The sequence number of the currently clocked Interrupter (= Interrupter sequence number) | 1 to 99; in this specific case: 13 own CPSs + 26 foreign CPSs = **39** |
| --- | --- | --- |
| 4i.a | The name for the sequence of the assigned clocked CPS (= The name of the clocked CPS) | e.g., 1 - CPS Seňa |
| 4i.b | When measuring CPS ranges, clock from Order No. (including) | 1 |
| 4i.c | When measuring CPS ranges, clock up to Order No. (including) | 17 (we have 17 pcs T-3 (1) available) |

We measure until the measured object CP (19) on the route of the product pipeline begins to reach the CPS (9), in which the Interrupter T-3 (1) with **Order No. e. g., 15,** and in which it no longer has scope e. g., CPS (9) No. 10. This means that clocks (1) with **Order No. 1 to 10** can be moved already after CPS (9) No. 17, while assigning them new names, e. g., as follows: **Order No. 18** = CPS Bol'kovce, **Order No. 19** = CPS Jelsovec, etc. up to **Order No. 28.** We continue the measurement from the next CP object (19) located on the diagnosed route, from the object where we stopped measuring.

In this way, the ZDaP-2 device (4) allows us, for example, for CPSs No. 11 to No. 17, we will not delete or rename the names of Interrupters (1) that are installed in them (i.e., their names will remain unchanged), and we will assign new names only to the newly installed CPSs (9) No. 18 to 28.

(2) The second setting for measuring ranges on Section No. 2:

| 4i. | The sequence number of the currently clocked Interrupter (= Interrupter sequence number) | **18** |
| --- | --- | --- |
| 4i.a | The name for the sequence of the assigned clocked CPS (= The name of the clocked CPS) | e.g., 18 - CPS Bol'kovce |
| 4i.b | When measuring CPS ranges, clock from Order No. (including) | 11 |
| 4i.c | When measuring CPS ranges, clock up to Order No. (including) | 28 (we have 17 pcs T-3 (1) available) |

We measure until the measured object CP (19) on the route of the product pipeline begins to reach the CPS (9), in which the Interrupter T-3 (1) with **Order No. e. g., 26,** and in which it no longer has scope e. g., CPS (9) No. 21. This means that clocks (1) with **Order No. 11 to 21** can be moved already behind CPS (9) No. 28, while assigning them new names, e. g., as follows: **Order No. 29** = CPS Obeckov, **Order No. 30** = CPS Ďurkovce, etc. up to **Order No. 39** = CPS Tesmák. We continue the measurement from the next CP object (19) located on the diagnosed route, from the object where we stopped measuring.

We will assign new names only to the newly installed CPSs No. 28 to 39.
(3) Third setting for measuring ranges on Section No. 3:

| 4i. | The sequence number of the currently clocked Interrupter (= Interrupter sequence number) | **28** |
|---|---|---|
| 4i.a | The name for the sequence of the assigned clocked CPS (= The name of the clocked CPS) | e.g., 28 - CPS Straciny |
| 4i.b | When measuring CPS ranges, clock from Order No. (including) | 22 |
| 4i.c | When measuring CPS ranges, clock up to Order No. (including) | 39 (we have 17 pcs T-3 (1) available) |

We measure until we measure the range of CPS No. 39 up to the last measured CP object (19) on the product pipeline route.

**Example 2**

The device and method of its use is as in example 1.

In the ZDaP-2 device (4) there is a setting of date, time (including correction to UTC) and the current day of the week, setting of timing parameters (pulse period T, width of OFF pulse) and setting of the number of fixed T-3 Interrupters (1), the number of their repetitions, the order of the T-3 Interrupter (1) which is in the order of clocking including the name of the assigned CPS, and the inactive state performed from the data processing device (7) through the cable connection of serial port (11), or via Bluetooth technology (10).

In this case, the T-3 Interrupters (1) firmly placed in the CPS (9) are connected in such a way that the rectifier (8) installed in the CPS (9) does not have a control T-input ("T" = Clock input (16)) for external switching OFF or switching ON the output DC voltage (Fig. 7).

In this case, no clock cable (20) is connected to the clock output (16) on the left terminal XC2 of the ZDaP-2 device (4).

In the ZDaP-2 device (4), the measurement of the $E_{off}$ and $E_{on}$ potentials is started automatically after pressing the "START" button only after the set number of repetitions of the previous fixed Interrupter T-3 (1) has finished.

After the end of the recording in the given CPS (9), the ZDaP-2 device (4) will give a sound signal about the end of the recording.

**Example 3**

The device and method of its use is as in example 1.

In the ZDaP-2 device (4) there is a setting of date, time (including correction to UTC) and the current day of the week, setting of timing parameters (pulse period T, width of OFF pulse) and setting of the number of fixed T-3 Interrupters (1), the number of their repetitions, the order of the T-3 Interrupter (1) which is in the clocking order, including the name of the assigned CPS and the inactive state performed automatically after the cable connection to the portable Interrupter T-3 (3) through the serial port (11), or via Bluetooth technology (10).

In this case, the rectifier (8) installed in the CPS (9) has a control T-input ("T" = Clock input (16)) for external switching ON or OFF of the output DC voltage (Fig. 8).

In the ZDaP-2 device (4), the measurement of the $E_{off}$ and $E_{on}$ potentials is started automatically after pressing the "START" button only after the set number of repetitions of the previous fixed Interrupter T-3 (1) has finished.

After the end of the recording in the given CPS (9), the ZDaP-2 device (4) in this case does not give an audio signal about the end of the recording.

**Example 4**

The solution according to example 1 is applied to modern rectifiers (8) placed in CPSs (9), which, due to the implementation of synchronous clocking, contain a GPS receiver (15) with the appropriate software.

**Example 5**

The solution according to example 1 is applied to already existing remote monitoring and control systems (with modified software, equipped with a GPS time signal receiver) aimed, among other things, at remote monitoring of CPS parameters ($U_{OUT}$, $I_{OUT}$, $E_{on}$) and remote setting of $U_{OUT}$, $I_{OUT}$, $E_{on}$, or also for remote setting of timing parameters and to enable/stop timing at a preset date and time.

**Industrial applicability**

The presented solution will be used in the field of diagnostic measurements of metal pipelines in the field, especially in the field of measurements and diagnostics of metal product pipelines, focused on cathodic corrosion protection.

The solution will ensure the advantage of measuring, processing and evaluating data related to CP while obtaining a large amount of highly accurate and automatically recorded data, as well as saving costs. The resulting outputs are processed into a graphic form in order to make it easier for the operator to evaluate the measurement results.

**List of reference signs and abbreviations**

fixed Programmable GPS Interrupter type T-3, manufactured and sold by the applicant, (1) actively (cathodically) protected pipeline (2)

portable Programmable GPS Interrupter type T-3, manufactured and sold by the applicant, (3)

Device for measuring of CPSs range and measuring of $E_{off}$ / $E_{on}$ potentials, type ZDaP-2, manufactured and sold by the applicant, (4)

4-channel digital oscilloscope (5)

memory of the oscilloscope (6)

data processing device = laptop (7)

rectifier = DC voltage source (8)

cathodic protection station CPS (= rectifier, DC power supply - stored, situated e. g. in a fiberglass kiosk) (9)

serial line, (or Bluetooth or other wireless technology) (10)

serial port (e. g., Bluetooth) (11)

Anode grounding Segments - ASs (12)

soil (13)

graphite (coke breeze) ground bed (14)

GPS receiver (15)

timing = clock input - on the rectifier (16)

DC cable distribution (17)

terminal block, measuring terminal (18)

CP (Cathodic protection) Object (i. e., CPS, EUD, EFD, AS-JO, DP-BO, other COs, BOs, TPs) (19)

timing cable (20)

cathodically protected underground metal structure (pipeline) (21)

LV connection, LV concrete column (22)

voltmeter with high input resistance ($R_{vst} \geq 1M\Omega$) (23)

MC - Measuring (unloaded) Core of the cable welded to the pipe (24)

MP - built-in Measuring Probe $Cu/CuSO_4$ (i. e., CSE), fixed in the ground; measurement test coupons with areas of $100cm^2$ / $10cm^2$ are usually also placed on it - (25)

ME - $Cu/CuSO_4$ portable reference Measuring Electrode (i. e., CSE) (26)

soil surface (27)

DP-BO - Drain Point Bonding Object - (usually implemented by using of SCS (PTP) with terminal block connected between the Negative Pole of the Source and the pipe) (28)

AS-JO - Anode Segments Junction Object (usually implemented by using SCS (PTP) with terminal block connected between the Positive Pole of the Source and individual segments of ASs) (29)

## Claims

1. An arrangement for collecting and processing data related to the cathodic protection of product pipelines, **characterized by the fact** that it contains fixed devices and portable devices that are electronically connected for mutual communication and data transmission, wherein the fixed devices are Programmable GPS Interrupters (1) placed in each of a total of a number n of Cathodic Protection Stations, referred to hereinafter as CPS, (9) with reach to a diagnosed pipeline route (2), where n equals the number of CPS (9) on the inspected pipeline route (2), and wherein the portable devices include a portable Programmable GPS Interrupter (3), a Device (4) for measuring a CPSs range or reach and $E_{off}$ / $E_{on}$ potentials, 4-channel oscilloscope (5) and a data processing device (7) equipped with a control program for the Device (4) for measuring the CPSs range and the potentials, wherein all fixed Programmable GPS Interrupters (1) are individually programmed with respect to the associated CPS (9), and the portable Programmable GPS Interrupter (3) is adapted to synchronize the Devices (4) for measuring the CPSs range and the potentials with fixed Programmable GPS Interrupters (1), while the fixed Programmable GPS Interrupters (1) and the portable Programmable GPS Interrupter (3) are synchronously controlled by a GPS time signal, and the portable Programmable GPS Interrupter (3) is connected to the Device (4) for measuring the CPSs range and the potentials using a serial line (10) via a serial port (11) or Bluetooth technology (10), and the data processing device (7) is electronically connected to the Device (4) for measuring the CPSs range and the potentials and the corresponding potentials, and for processing and evaluating measured data.

2. The arrangement for collecting and processing data related to cathodic protection of product pipelines according to claim 1, **characterized by the fact that** the fixed GPS Programmable GPS Interrupter (1) is a device for synchronously interrupting a protective current, which is used for the cathodic protection of product pipelines, from the CPS - cathodic protection stations (9).

3. The arrangement for collecting and processing data related to the cathodic protection of product pipelines according to claim 1 or 2, **characterized by the fact that** the 4-channel oscilloscope (5) is a digital oscilloscope with a memory (6) for storing the measured data.

4. The arrangement for collecting and processing data related to cathodic protection of product pipelines according to one of the preceding claims 1 to 3, **characterized by the fact that** the data processing device (7) is a PC or laptop, preferably with OS Windows® 10 and a Microsoft® Excel® program, as well as a control program for the Device (4) installed thereon.

5. The arrangement for collecting and processing data related to the cathodic protection of product pipelines according to one of the preceding claims 1 to 4, **characterized by the fact that** rectifiers (8) are placed in the CPS (9), which includes a Programmable GPS Interrupter, which contains a GPS receiver (15) with appropriate software for performing synchronous clocking.

6. The arrangement for collecting and processing data related to the cathodic protection of product pipelines according to claim 5, **characterized by the fact that** the rectifiers (8) located in the CPSs (9) do not have a control time-input (T) for externally switching OFF or switching ON an output DC voltage, which is used for the cathodic protection of product pipelines.

7. The arrangement for collecting and processing data related to cathodic protection of product pipelines according to one of the preceding claims 1 to 5, **characterized by the fact** that DC voltage sources (8) are located in the CPSs (9), which have a control time-input (T) for externally switching OFF or switching ON an output DC voltage, which is used for the cathodic protection of product pipelines.

8. A method of collecting and processing data related to the cathodic protection of product pipelines using an arrangement according to one of the preceding claims, **characterized by the fact that** it comprises the steps:

   • a number of n fixed Programmable GPS Interrupters (1) are programmed, and then placed and connected to a number of n-1 individual CPS (9), and they are turned On, and an object name of a CPS (9) is assigned to each of the n fixed Programmable GPS Interrupter (1);
   • a current provided by the fixed Programmable GPS Interrupter (1) is individually programmed when measuring a range of the CPSs (9) by setting its individual configuration profile, which is then stored in a memory of the fixed Programmable GPS Interrupter (1) before turning it Off, the ratio of time $T_{off}$ : period T is set in the ratio of approximately 1 : 3, and after turning On the fixed Programmable GPS Interrupter (1) the selected configuration profile starts and automatically starts the timing of the fixed Programmable GPS Interrupter (1) with the parameters set according to the individual configuration profile;
   • the portable Programmable GPS Interrupter (3) is connected to the number of n-1 individual CPS (9), or to accessible above-ground parts of a pipeline together with the Device (4) for measuring the CPSs range and the Eoff / Eon potentials, a 4 -channel oscilloscope (5) and a data processing device (7) equipped with a control program for the Device (4) for measuring CPSs range and potentials, and then the portable Programmable GPS Interrupter (3) is programmed, connected to the Device (4) for measuring of CPSs range and potentials and turned On, while the Programmable GPS Interrupter (3) is synchronized to the GPS signal, and the Device (4) for measuring of CPSs range and potentials is then connected to BNC inputs of the 4 - channel oscilloscope (5), and via a connector, in particular a USB connector, or Bluetooth technology (10), the data processing device (7) is connected to the Device (4) for measuring CPSs range and potentials in the CPS (9), or in the measured CP object (19), corresponding cables leading from the Device (4) for measuring CPSs range and potentials to a terminal block in the CPS (9) are connected to individual terminals, then the Device (4) for measuring CPSs range and potentials is set by setting the parameters of a current date, time including correction to UTC and day of the week, then clock parameters (T) pulse period, OFF pulse width are set, then the number of fixed Programmable GPS Interrupters (1), the number of their repetitions, the order of the actual (currently clocked) fixed Programmable GPS Interrupter (1) which is in the order of clocking from 1 to n, and the name of the CPS (9) belonging to it, and the inactive state of the other non-clocked fixed Programmable GPS Interrupters (1) is set on the Device (4) for measuring the CPSs range and the potentials;
   • then in the Device (4) for measuring CPSs range and potentials a desired moment of sampling the potentials $E_{off}$ and $E_{on}$ is set with a step of 10 ms, and then the measurement of the potentials $E_{off}$ and $E_{on}$ is started, while at the same time in the 4 -channel oscilloscope (5) as well as in the data processing device (7) measurement with recording is enabled;
   • while the portable Programmable GPS Interrupter (3) controls the synchronization of the Device (4) for measuring the CPSs range and the $E_{off}$ and $E_{on}$ potentials with the fixed Programmable GPS Interrupters (1), and the fixed Programmable GPS Interrupters (1) and the portable Programmable GPS Interrupter (3) are synchronously controlled by a GPS time signal, and the Device (4) in conjunction with the portable Programmable GPS Interrupter (3) records and displays on a display of the arrangement information about the current parameters and settings of the arrangement in BCD - code, which are subsequently written into a memory (6) of the 4 - channel oscilloscope (5), on a display, on which measured potential curves in the CP object (19) or on an accessible above-ground part of the pipeline (2) are also displayed, and from there they are transferred to the data processing device (7), in which the data is further processed and evaluated; and after the end of the recording, the data is saved and the portable devices are turned Off;
   • the Device (4) for measuring CPSs range and potentials is disconnected from CPS (9) or from the above-ground parts of the pipeline, and the portable devices are then moved to the next CP object (19) or to the accessible above-ground parts of the pipeline (2) in order, while the measurement procedure is repeated on each number 1-n of CPS (9), or on the CP object (19), until the end of the measurement on the last CPS (9) of the diagnosed pipeline route (2) is reached;

• and then the output is processed by the data processing device (7) to determine the critical points in case of failure of some CPS (9) among all CP objects (19) and accessible above-ground parts of the pipeline (2), while each CP object (19) is evaluated as a critical point, where the measured potential $E_{off}$ > -0.850 V.

9. The method of collecting and processing data related to cathodic protection of product pipelines according to claim 8, **characterized by the fact that** in the Device (4) for measuring CPSs range and potentials there is a setting of the date, time, including correction against UTC and the current day of the week, setting of clocking parameters: pulse period T, OFF pulse width and setting of the number of fixed Programmable GPS Interrupters (1), the number of their repetitions, the order of the fixed Programmable GPS Interrupters (1), which is in the clocking order, and the name of the associated CPS (9), inactive status done by hand.

10. The method of collecting and processing data related to the cathodic protection of product pipelines according to claim 9, **characterized by the fact that** in the Device (4) for measuring of CPSs range and potentials there is a setting of the date, time, including correction against UTC and the current day of the week, setting of clocking parameters pulse period T, OFF pulse width and setting of the number of fixed Programmable GPS Interrupters (1), the number of their repetitions, the order of the fixed Programmable GPS Interrupters (1) which is in the clocking order and the name of the associated CPS (9), inactive state performed automatically after connecting to the portable Programmable GPS Interrupter (3) via a serial port (11) or Bluetooth technology (10).

11. The method of collecting and processing data related to the cathodic protection of product pipelines according to one of the claims 8 to 10, **characterized by the fact that** in the Device (4) for measuring CPSs range and potentials the required moment of sampling the potentials $E_{off}$ and $E_{on}$ with a step of 10 ms is set from the time $t_{off} = t_o = 0$ sec, i.e., from the moment-beginning of the start time ($t_o$) of the measurement of the potential $E_{off}$ and for the sampling time of the potential $E_{off}$ is set $t_{sample-off}$ = 0.10 sec to 2.98 sec for $T_{off}$ = 1 to 3 sec.; for the sampling time of the $E_{on}$ potential is set $t_{sample-on}$ = 2.95 sec to 9.95 sec for $T_{on}$ = 2 to 9 sec.

12. The method of collecting and processing data related to cathodic protection of product pipelines according to one of the claims 8 to 11, **characterized by the fact that** in the Device (4) for measuring CPSs range and potentials, the measurement of $E_{off}$ and $E_{on}$ potentials is started automatically after pressing a START button only after the end of the set of the number of repetitions of the previous fixed Programmable GPS Interrupter (1).

13. The method of collecting and processing data related to the cathodic protection of product pipelines according to one of the claims 8 to 12, **characterized by the fact that** after the end of the recording in the given CPS (9), as well as on the accessible above-ground parts of the pipeline (2), the Device (4) for measuring CPSs range and measuring Eoff / Eon potentials issues a sound signal for the end of the recording.

14. The method of collecting and processing data related to the cathodic protection of product pipelines according to one of the claims 8 to 13, **characterized by the fact that** digitally measured outputs from the Device (4) for measuring of CPSs range and measuring Eoff / Eon potentials, displayed and recorded in a memory of the 4 - channel oscilloscope (5) contain the waveforms of the depolarization potential measured on each CP object (9) as well as on accessible above-ground parts of the pipeline (2), also contain the recorded number of fixed Programmable GPS Interrupter (1), the number of repetitions of the clocked fixed Programmable GPS Interrupters (1), its order, the inactive status of the other currently unclocked fixed Programmable GPS Interrupters (1), as well as the recorded values of the potentials $E_{off}$, $E_{on}$ on the unloaded measuring core MC of the pipeline (2) and on test coupons of 100 $cm^2$ / 10 $cm^2$ of the built-in measuring probe (25) against the built-in (25) and portable electrode (26) for each measured CPS (9) or CP object (19).

15. The method of collecting and processing data related to cathodic protection of product pipelines according to one of the claims 8 to 14, **characterized by the fact that** the Device (4) for measuring CPSs range and measuring Eoff / Eon potentials, records the measured data $E_{off}$ and $E_{on}$ sampled at an adjustable time from time $t_o$ = start time of duration $T_{off}$ with a step of 10 ms into a table in .csv format, and after transferring the data to the data processing device (7), a file in .xlsx format is created, and after inserting a evaluation criterion into this file, it is automatically evaluated by the data processing device (7) the range of the relevant CPS (9) to the place where the corresponding measured and evaluated CP object (19) is located, as well as whether the measured CP object (19) or the accessible above-ground part of the pipeline (2) is a critical point in the event of a failure of the operation of any CPS (9), while the critical point has a measured potential $E_{off}$ > -0.850 V, while the potentials $E_{on\,MC}$, $E_{off\,MC}$ must be measured on the unloaded measuring core (MC) of the pipeline (2) in the CP objects (19) on the terminal block.

**16.** The method of collecting and processing data related to cathodic protection of product pipelines according to claim 15, **characterized by the fact that** the criterion for evaluating the range of the relevant CPS (9) to the measured and evaluated CP object (19) is the state when $| E_{on\ MC} - E_{off\ MC} | \geq 50$ mV.

**17.** The method of collecting and processing data related to the cathodic protection of product pipelines according to claim 15 or 16, **characterized by the fact that** the criterion for evaluating the critical point on the diagnosed route in the event of a failure of some CPS (9) is the state when the measured potential $E_{off\ MC} > -850$ mV.

**18.** The method of collecting and processing data related to the cathodic protection of product pipelines using the device according to one of the claims 8 to 17, **characterized by the fact that** the method is applied to existing modern rectifiers - switching sources placed in CPS (9), which, due to the implementation of synchronous clocking, contain a GPS receiver with appropriate software.

**19.** The method of collecting and processing data related to the cathodic protection of product pipelines using the device according to requirement 8 to 18, **characterized by the fact that** the method applies remote monitoring and control systems with modified software, equipped with a GPS time signal receiver, aimed at remote monitoring of CPS parameters (9) and their remote setting, or for remote setting of timing parameters and to enable/stop timing at a preset date and time.

Fig. 1

Fig. 2

Fig. 3

Fig. 4

Fig. 5

Fig. 6

Fig. 7

to the Anode segments x   12

**AS-JO No. x**
18, 19, 29

**Programmable GPS interrupter T-3 No. x**

1

15

GPS
Ant.

− PO +
**AO**

17

20

**CPS No. x**
8, 9

L+

16

T

P−  EP+

L−

17
to the Pipeline

**DP-BO No. x**
18, 19, 24, 28

to the Pipeline  21

to the **MP MS-110 No. x** :   100   E
25                                10

Fig. 8

| | | |
|:---:|:---:|:---:|
| Fig. 9.1 | Fig. 9.2 | Fig. 9.3 |
| Fig. 9.4 | Fig. 9.5 | Fig. 9.6 |
| Fig. 9.7 | Fig. 9.8 | Fig. 9.9 |

## List of sheets for Fig. 9

Fig. 9

to the Anode segments 2

12

**AS-JO No. 2**
18, 19, 29

Fig. 9.1

to the Anode segments (x)
12

**AS-JO No. (x)**
18, 19, 29

**Programmable GPS**
**interrupter T-3 No. (x)**
1

15

VV
PV

GPS
Ant.

17

20

**CPS No. (x)**
8, 9

L+

L-

16

T
P- EP+

17

**TP No. 2**
19

to the Anode segments 3
12

**AS-JO No. 3**
18, 19, 29

**Programmable GPS**
**interrupter T-3 No. 3**
1

15

VV
PV

GPS
Ant.

17

20

**CPS No. 3**
8, 9

L+

L-

16

T
P- EP+

17

**DP-BO No. 3**

Fig. 9.2

to the Anode segments (n)

**Water pipeline DN400**
2, 21

**AS-JO No. (n)**
18, 19, 29

12

**Programmable GPS
interrupter T-3 No. (n)**
1

15

VV
PV

GPS
Ant.

**DP-BO No. (n)**
18, 19, 24, 28

17

16
L+
T
P- EP+
L-

20

**CPS No. (n)**
8, 9

17

**Oil pipeline DN700**
2, 21

**MP MS-110 No. (n)**
25

100    10

**CO-B No. (x)**
19

**DP-BO No. (x)**
18, 19, 24, 28

100    10

**MP MS-110 No. (x)**
25

Fig. 9.3

to the Anode segments 1
12

AS-JO No. 1
18, 19, 29

Programmable GPS
interrupter T-3 No. 2
1

15
VV GPS
PV Ant.

17 20

CPS No. 2
8, 9
16

L+
L- T
P- EP+

Programmable GPS
interrupter T-3 No. 1
1

15
VV GPS
PV Ant.

17 20

CPS No. 1
8, 9
16

L+
L- T
P- EP+

17

DP-BO No. 2
18, 19, 24, 28

DP-BO No. 1
18, 19, 24, 28

17

CO-B No. 1
19

100 10

MP MS-110 No. 2
25

100 10 25

MP MS-110 No. 1

2, 21

2, 21

Steel Gas pipeline DN300
2, 21

Fig. 9.4

**DP-BO No. 3**
18, 19, 24, 28

100        10

**MP MS-110 No. 3**
25

**CO-B No. 2**
19

**TP No. 1**
19

Fig. 9.5

TP No. (x)
19

to the Anode segments (n-1)
12

AS-JO No. (n-1)
18, 19, 29

Programmable GPS
interrupter T-3 No. (n-1)
1

15

VV
PV

GPS
Ant.

17

20

CPS No. (n-1)
8, 9

L+

L-

16

T
P-  EP+

DP-BO No. (n-1)
18, 19, 24, 28

17

100    10

MP MS-110 No. (n-1)
25

2, 21

Fig. 9.6

**Programmable GPS interrupters type T-3 as well as the Range and Potential measuring device type ZD**

**Graph 9: Time history (waveforms) of potentials on individual measurement cores (MCs) in DP-BO on th**

Table 9: Table of corresponding outputs from CPS 1 to n (0 = CPS Off; 1 = CPS On) for Inactive state On / Off

Fig. 9.7

ZDaP-2 are set as follows: 3g. Inactive state: On/Off; 4a. Pulse period: 6sec; 4b. OFF pulse width: 2sec; 4g. Numl

the diagnosed Oil pipeline

Fig. 9.8

imber of interrupters: n = 6; 4h. Number of repetitions: 3; 4i. Interrupter sequence number: 1 to 6;

Fig. 9.9

Fig. 10.1

Fig. 10.2

Fig. 10.3

Fig. 10.4

List of sheets for Fig. 10

Fig. 10

Fig. 10.1

Fig. 10.2

Fig. 10.3

Fig. 10.4

```
┌─────────────────────┐       ┌─────────────────────┐
│                     │       │                     │
│                     │       │                     │
│     Fig. 11.1       │       │     Fig. 11.2       │
│                     │       │                     │
│                     │       │                     │
└─────────────────────┘       └─────────────────────┘


┌─────────────────────┐       ┌─────────────────────┐
│                     │       │                     │
│                     │       │                     │
│     Fig. 11.3       │       │     Fig. 11.4       │
│                     │       │                     │
│                     │       │                     │
└─────────────────────┘       └─────────────────────┘
```

List of sheets for Fig. 11

Fig. 11

A    B    C    D    E    F    G    H    I    J

Tab. 11: Table of mesured values of $E_{off}$ / $E_{on}$ potentials on the CP object: **CO-B No. 1** + evaluation

| (data gained from the setup of ZDaP-2) | | | | | | | | |
|---|---|---|---|---|---|---|---|---|
| Start of measurement: 27.7.2022 15:43 | | Required moment of sampling potentials $E_{off}$ a $E_{on}$ – to set up with steps of 10ms from the time $t_{off} = t_0 = 0,00$ sec : | | | | | | |
| Day of the week: Wednesday | | | | | | | | |
| Time Toff = 2 sec | | for potential $E_{off}$ set $t_{sample-off}$ : | | | = 0,98 sec | | | |
| Period of impulses T = 6 sec | | for potenrial $E_{on}$ set $t_{sample-on}$ : | | | = 5,95 sec | | | |
| Serial number of the double sample measurement | Number of interrupters T-3 | Number of repetitions of the clocked interrupters T-3 | Sequence number of the clocked interrupter T-3 | Name of interrupted (clocked) CPS | Inactive status of the other T-3s | Potentials measured against the electrode : | Start of measuring the doublesample |
| Set up at the START of the measurement on the ZDaP-2: | 6 | 3 | In reality interrupted 4, set up already 5 | CPS Dvorniky | Off | E portable | 15:42:59 |
| 1 | | | 5 | CPS Čataj | Off | E built in | 15:43:03 |
| 2 | 6 | 3 | 5 | CPS Čataj | Off | E built in | 15:43:09 |
| 3 | | | 5 | CPS Čataj | Off | E portable | 15:43:15 |
| 4 | | | 6 | CPS Blatné | Off | E built in | 15:43:21 |
| 5 | 6 | 3 | 6 | CPS Blatné | Off | E built in | 15:43:27 |
| 6 | | | 6 | CPS Blatné | Off | E portable | 15:43:33 |
| 7 | | | 1 | CPS Seňa | On | E built in | 15:43:39 |
| 8 | 6 | 3 | 1 | CPS Seňa | On | E built in | 15:43:45 |
| 9 | | | 1 | CPS Seňa | On | E portable | 15:43:51 |
| 10 | | | 2 | CPS Mokrance | On | E built in | 15:43:57 |
| 11 | 6 | 3 | 2 | CPS Mokrance | On | E built in | 15:44:03 |
| 12 | | | 2 | CPS Mokrance | On | E portable | 15:44:09 |

Fig. 11.1

M  N  O  P  Q F S  T

**ı of measured data**

| (data gained by measurement from ZDaP-2) | | | | | (evaluation of measured data) | |
|---|---|---|---|---|---|---|
| | | | | Criteria for the range of CPS: $\|E_{on} - E_{off}\| \geq 50mV$ | Range of CPS with listed names on the CP Object with name: | Criteria for the critical points: -850mV |
| Potential $E_{off}$ [V] measured : 0,98 s from the begining of $t_0$ | | Potential $E_{on}$ [V] measured: 5,95 s from the begining of $t_0$ | | | | |
| on the measuring (not- loaded) core of the pipe (MC) | on the test coupon 100cm², or. 10cm² placed on the MP | on the measuring (not- loaded) core of the pipe (MC) | on the test coupon 100cm², or. 10cm² placed on the MP | Difference $E_{on} - E_{off}$ on measured core (MC) [V] | **CO-B No. 1** | CO-B No. 1 is the critical point for CPS with name: |
| -0,720 | -0,708 | -0,740 | -0,728 | -0,020 | no | |
| -0,730 | -0,718 | -0,740 | -0,728 | -0,010 | no | not evaluated |
| -0,740 | -0,750 | -0,750 | -0,760 | -0,010 | no | |
| -0,720 | -0,709 | -0,740 | -0,729 | -0,020 | no | |
| -0,730 | -0,719 | -0,740 | -0,729 | -0,010 | no | not evaluated |
| -0,740 | -0,750 | -0,750 | -0,760 | -0,010 | no | |
| -1,110 | -1,099 | -1,490 | -1,479 | -0,380 | YES | no |
| -1,120 | -1,109 | -1,560 | -1,549 | -0,440 | YES | no |
| -1,130 | -1,140 | -1,600 | -1,610 | -0,470 | YES | no |
| -0,890 | -0,879 | -1,010 | -0,999 | -0,120 | YES | no |
| -0,900 | -0,889 | -1,010 | -0,999 | -0,110 | YES | no |
| -0,905 | -0,915 | -1,020 | -1,030 | -0,115 | YES | no |

Fig. 11.2

| | | | | | | | | | |
|---|---|---|---|---|---|---|---|---|---|
| 13 | | | | 3 | CPS Drahňov | On | E built in | 15:44:15 |
| 14 | 6 | 3 | | 3 | CPS Drahňov | On | E built in | 15:44:21 |
| 15 | | | | 3 | CPS Drahňov | On | E portable | 15:44:27 |
| 16 | | | | 4 | CPS Dvorniky | On | E built in | 15:44:33 |
| 17 | 6 | 3 | | 4 | CPS Dvorniky | On | E built in | 15:44:39 |
| 18 | | | | 4 | CPS Dvorniky | On | E portable | 15:44:45 |
| 19 | | | | 5 | CPS Čataj | On | E built in | 15:44:51 |
| 20 | 6 | 3 | | 5 | CPS Čataj | On | E built in | 15:44:57 |
| 21 | | | | 5 | CPS Čataj | On | E portable | 15:45:03 |
| 22 | | | | 6 | CPS Blatné | On | E built in | 15:45:09 |
| 23 | 6 | 3 | | 6 | CPS Blatné | On | E built in | 15:45:15 |
| 24 | | | | 6 | CPS Blatné | On | E portable | 15:45:21 |
| 25 | | | | 1 | CPS Seňa | Off | E built in | 15:45:27 |
| 26 | 6 | 3 | | 1 | CPS Seňa | Off | E built in | 15:45:33 |
| 27 | | | | 1 | CPS Seňa | Off | E portable | 15:45:39 |
| 28 | | | | 2 | CPS Mokrance | Off | E built in | 15:45:45 |
| 29 | 6 | 3 | | 2 | CPS Mokrance | Off | E built in | 15:45:51 |
| 30 | | | | 2 | CPS Mokrance | Off | E portable | 15:45:57 |
| 31 | | | | 3 | CPS Drahňov | Off | E built in | 15:46:03 |
| 32 | 6 | 3 | | 3 | CPS Drahňov | Off | E built in | 15:46:09 |
| 33 | | | | 3 | CPS Drahňov | Off | E portable | 15:46:15 |
| 34 | | | | 4 | CPS Dvorniky | Off | E built in | 15:46:21 |
| 35 | 6 | 3 | | 4 | CPS Dvorniky | Off | E built in | 15:46:27 |
| 36 | | | | 4 | CPS Dvorniky | Off | E portable | 15:46:33 |

| | | | | | | |
|---|---|---|---|---|---|---|
| Overall evaluation of the measurement: | | | | | Time of measurement [minutes]: | 0:03:30 |
| | | | | | Minimal protection potential [V]: | |
| | | | | | Maximal protection potential [V]: | |

Fig. 11.3

| | | | | | | |
|---|---|---|---|---|---|---|
| -0,849 | -0,838 | -0,869 | -0,858 | -0,020 | no | YES |
| -0,850 | -0,839 | -0,860 | -0,849 | -0,010 | no | no |
| -0,854 | -0,864 | -0,864 | -0,874 | -0,010 | no | no |
| -0,900 | -0,889 | -1,280 | -1,269 | -0,380 | YES | no |
| -0,910 | -0,899 | -1,350 | -1,339 | -0,440 | YES | no |
| -0,920 | -0,930 | -1,390 | -1,400 | -0,470 | YES | no |
| -0,720 | -0,709 | -0,740 | -0,729 | -0,020 | no | YES |
| -0,730 | -0,719 | -0,740 | -0,729 | -0,010 | no | YES |
| -0,740 | -0,750 | -0,750 | -0,760 | -0,010 | no | YES |
| -0,720 | -0,709 | -0,740 | -0,729 | -0,020 | no | YES |
| -0,730 | -0,719 | -0,740 | -0,729 | -0,010 | no | YES |
| -0,740 | -0,750 | -0,750 | -0,760 | -0,010 | no | YES |
| -0,930 | -0,919 | -1,030 | -1,019 | -0,100 | YES | |
| -0,940 | -0,929 | -1,040 | -1,029 | -0,100 | YES | not evaluated |
| -0,960 | -0,970 | -1,040 | -1,050 | -0,080 | YES | |
| -0,870 | -0,859 | -0,940 | -0,929 | -0,070 | YES | |
| -0,880 | -0,869 | -1,050 | -1,039 | -0,170 | YES | not evaluated |
| -0,880 | -0,890 | -1,140 | -1,150 | -0,260 | YES | |
| -0,720 | -0,709 | -0,740 | -0,729 | -0,020 | no | |
| -0,730 | -0,719 | -0,740 | -0,729 | -0,010 | no | not evaluated |
| -0,740 | -0,750 | -0,750 | -0,760 | -0,010 | no | |
| -0,870 | -0,859 | -1,030 | -1,019 | -0,160 | YES | |
| -0,880 | -0,869 | -1,050 | -1,039 | -0,170 | YES | not evaluated |
| -0,870 | -0,880 | -1,080 | -1,090 | -0,210 | YES | |

| | | | | Number of CPSs with the range up to CO-B No. 1: | Number of critical points: |
|---|---|---|---|---|---|
| -1,130 | -1,140 | -1,600 | -1,610 | | |
| -0,720 | -0,708 | -0,740 | -0,728 | 3 | 2 |

Fig. 11.4

EP 4 407 069 A2

Fig. 12

**EP 4 407 069 A2**

**REFERENCES CITED IN THE DESCRIPTION**

**Patent documents cited in the description**

- DE 102011111774 B4
- US 9878897 B2